(19) **Europäisches Patentamt / European Patent Office / Office européen des brevets**

(11) **EP 4 668 932 A1**

(12) **EUROPEAN PATENT APPLICATION**
published in accordance with Art. 153(4) EPC

(43) Date of publication:
24.12.2025 Bulletin 2025/52

(21) Application number: 24734780.0

(22) Date of filing: 16.02.2024

(51) International Patent Classification (IPC):
H04W 72/04 (2023.01)     H04W 72/0457 (2023.01)
H04W 72/53 (2023.01)     H04W 72/12 (2023.01)
H04W 72/231 (2023.01)     H04W 72/232 (2023.01)
H04L 5/00 (2006.01)     H04L 27/26 (2006.01)
H04W 88/02 (2009.01)

(52) Cooperative Patent Classification (CPC):
H04L 5/00; H04L 27/26; H04W 72/04;
H04W 72/0457; H04W 72/12; H04W 72/231;
H04W 72/232; H04W 72/53; H04W 88/02

(86) International application number:
PCT/KR2024/095326

(87) International publication number:
WO 2024/172612 (22.08.2024 Gazette 2024/34)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 16.02.2023  US 202363446310 P
06.04.2023  KR 20230045714
12.05.2023  KR 20230062018
09.08.2023  KR 20230104459
27.09.2023  KR 20230131236

(71) Applicant: LG Electronics Inc.
Seoul 07336 (KR)

(72) Inventors:
• **AHN, Seungjin**
Seoul 06772 (KR)
• **LEE, Youngdae**
Seoul 06772 (KR)
• **KIM, Jaehyung**
Seoul 06772 (KR)
• **YANG, Suckchel**
Seoul 06772 (KR)
• **KIM, Seonwook**
Seoul 06772 (KR)
• **LEE, Sunghoon**
Seoul 06772 (KR)

(74) Representative: **Mooser, Sebastian Thomas
Wuesthoff & Wuesthoff
Patentanwälte und Rechtsanwalt PartG mbB
Schweigerstraße 2
81541 München (DE)**

(54) **DEVICE AND METHOD FOR ALLOCATING FREQUENCY RESOURCE FOR CHANNEL TRANSMISSION IN WIRELESS COMMUNICATION SYSTEM**

(57)     The present disclosure relates to allocation of a frequency resource for channel transmission in a wireless communication system, and a method performed by a terminal may include transmitting a random access preamble to a base station, receiving a random access response message from the base station, transmitting a connection request message to the base station, identifying that a channel scheduled by the base station has a larger bandwidth than a threshold, and in response to the channel having the larger bandwidth than the threshold, performing at least one operation related to failure of contention resolution.

START

S1701
TRANSMIT RANDOM ACCESS PREAMBLE

S1703
RECEIVE RANDOM ACCESS RESPONSE MESSAGE

S1705
TRANSMIT CONNECTION REQUEST MESSAGE

S1707
IDENTIFY RESOURCE ALLOCATION OF
BANDWIDTH THAT IS LARGER THAN THRESHOLD

S1709
PERFORM OPERATION ASSOCIATED WITH
CONTENTION RESOLUTION FAILURE

END

**FIG. 17**

## Description

### Technical Field

The present disclosure relates to a wireless communication system, and more particularly, to an apparatus and a method for allocating a frequency resource for channel transmission in a wireless communication system.

### Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

### Disclosure

### Technical Problem

The present disclosure may provide an apparatus and a method for allocating a frequency resource more effectively in a wireless communication system.

The present disclosure may provide an apparatus and a method for effectively allocating a resource to a terminal using a limited bandwidth in a wireless communication system.

The present disclosure may provide an apparatus and a method for indicating an allocated resource to a terminal using a limited bandwidth in a wireless communication system.

The present disclosure may provide an apparatus and a method for interpreting resource allocation information based on a limited bandwidth in a wireless communication system.

The present disclosure may provide an apparatus and a method for removing some resource blocks (RBs) in a frequency resource of a bandwidth exceeding a limited bandwidth in a wireless communication system.

The present disclosure may provide an apparatus and a method for determining a rule for removing some RBs in an indicated resource in a wireless communication system.

The present disclosure may provide an apparatus and a method for interpreting resource allocation information based on a resource allocation (RA) type in a wireless communication system.

The present disclosure may provide an apparatus and a method for allocating a resource based on a resource block group (RBG) size in a wireless communication system.

The present disclosure may provide an apparatus and a method for indicating an allocated resource based on a RA type in a wireless communication system.

The present disclosure may provide an apparatus and a method for indicating an allocated resource based on a RBG size in a wireless communication system.

The present disclosure may provide an apparatus and a method for limiting throughput of a terminal in a wireless communication system.

The present disclosure may provide a method for processing overlapping channels on a time axis in a wireless communication system.

The present disclosure may provide an apparatus and a method for removing some RBs of overlapping channels on a time axis in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

**Technical Solution**

As an example of the present disclosure, a method for operating a user equipment (UE) in a wireless communication system may include performing an access procedure with a base station, performing a connection establishment procedure for a primary cell with the base station, performing a connection establishment procedure for at least one secondary cell with the base station, receiving downlink control information (DCI) from the base station, and receiving data by using resources indicated by the DCI. The DCI may include information indicating resources in a plurality of cells including the primary cell and the at least one secondary cell and information indicating at least one cell not actually scheduled of the primary cell and the at least one secondary cell.

As an example of the present disclosure, a method for operating a base station in a wireless communication system may include performing an access procedure with a user equipment (UE), performing a connection establishment procedure for a primary cell of the UE, performing a connection establishment procedure for at least one secondary cell of the UE, transmitting downlink control information (DCI) to the UE, and transmitting data by using resources indicated by the DCI. The DCI may include information indicating resources in a plurality of cells including the primary cell and the at least one secondary cell and information indicating at least one cell not actually scheduled of the primary cell and the at least one secondary cell.

As an example of the present disclosure, in a user equipment (UE) in a wireless communication, the UE comprising a transceiver and a processor coupled with the transceiver, the processor may be configured to perform an access procedure with a base station, to perform a connection establishment procedure for a primary cell with the base station, to perform a connection establishment procedure for at least one secondary cell with the base station, to receive downlink control information (DCI) from the base station, and to receive data by using resources indicated by the DCI, and the DCI may include information indicating resources in a plurality of cells including the primary cell and the at least one secondary cell and information indicating at least one cell not actually scheduled of the primary cell and the at least one secondary cell.

As an example of the present disclosure, in a base station in a wireless communication system, the base station comprising a transceiver and a processor coupled with the transceiver, the processor may be configured to perform an access procedure with a user equipment (UE), to perform a connection establishment procedure for a primary cell of the UE, to perform a connection establishment procedure for at least one secondary cell of the UE, to transmit downlink control information (DCI) to the UE, and to transmit data by using resources indicated by the DCI, and the DCI may include information indicating resources in a plurality of cells including the primary cell and the at least one secondary cell and information indicating at least one cell not actually scheduled of the primary cell and the at least one secondary cell.

As an example of the present disclosure, a communication device may include at least one processor and at least one computer memory coupled with the at least one processor and storing an instruction that instructs operations when executed by the at least one processor, and the operations may include performing an access procedure with a base station, performing a connection establishment procedure for a primary cell with the base station, performing a connection establishment procedure for at least one secondary cell with the base station, receiving downlink control information (DCI) from the base station, and receiving data by using resources indicated by the DCI. The DCI may include information indicating resources in a plurality of cells including the primary cell and the at least one secondary cell and information indicating at least one cell not actually scheduled of the primary cell and the at least one secondary cell.

As an example of the present disclosure, a non-transitory computer-readable medium storing at least one instruction may include the at least one instruction that is executable by a processor, the at least one instruction may instruct a device to perform an access procedure with a base station, to perform a connection establishment procedure for a primary cell with the base station, to perform a connection establishment procedure for at least one secondary cell with the base station, to receive downlink control information (DCI) from the base station, and to receive data by using resources indicated by the DCI, and the DCI may include information indicating resources in a plurality of cells including the primary cell and the at least one secondary cell and information indicating at least one cell not actually scheduled of the primary cell and the at least one secondary cell.

The above-described aspects of the present disclosure are merely a part of exemplary embodiments of the present disclosure, and various embodiments reflecting technical features of the present disclosure may be derived and understood by those skilled in the art based on the detailed description of the present disclosure below.

**Advantageous Effects**

As is apparent from the above description, the embodiments of the present disclosure have the following effects.

According to the present disclosure, scheduling for a terminal with a limited bandwidth may be efficiently performed.

It will be appreciated by persons skilled in the art that that the effects that can be achieved through the embodiments of the present disclosure are not limited to those described above and other advantageous effects of the present disclosure will be more clearly understood from the following detailed description. That is, unintended effects according to implementation of the present disclosure may be derived by those skilled in the art from the embodiments of the present disclosure.

**Description of Drawings**

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.

FIG. 1 illustrates an example of a structure of a wireless communication system applicable to the present disclosure.
FIG. 2 illustrates an example of a wireless device applicable to the present disclosure.
FIG. 3 illustrates a frame structure in a wireless communication system applicable to the present disclosure.
FIG. 4 illustrates an example of a resource grid in a wireless communication system applicable to the present disclosure.
FIG. 5 illustrates an example of a physical resource block in a wireless communication system applicable to the present disclosure.
FIG. 6 illustrates an example of a slot structure in a wireless communication system applicable to the present disclosure.
FIG. 7 illustrates examples of physical channels and an example of a general signal transmission and reception method using the physical channels used in a wireless communication system applicable to the present disclosure.
FIG. 8 illustrates an example of physical resource block (PRB) allocation per resource block group (RBG) according to resource allocation (RA) type 0 that is applicable to the present disclosure.
FIG. 9 illustrates an example of PRB allocation according to RA type 1 that is applicable to the present disclosure.
FIG. 10 illustrates an example of a frequency resource with a RBG size of 16 according to an embodiment of the present disclosure.
FIG. 11 illustrates an example of a procedure of transmitting data in a wireless communication system according to an embodiment of the present disclosure.
FIG. 12 illustrates an example of a procedure of performing communication based on a RBG size adjusted in a wireless communication system according to an embodiment of the present disclosure.
FIG. 13 illustrates an example of a frequency resource with a RBG size of 8 according to an embodiment of the present disclosure.
FIG. 14 illustrates an example of a frequency resource with a RBG size of 4 according to an embodiment of the present disclosure.
FIG. 15 illustrates an example of a situation of channels overlapping on a time axis according to an embodiment of the present disclosure.
FIG. 16 illustrates an example of removing some resource blocks (RBs) in a situation of channels overlapping on a time axis according to an embodiment of the present disclosure.
FIG. 17 illustrates an example of a procedure of performing random access according to an embodiment of the present invention.

**Mode for Invention**

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

3GPP 6G may mean a post-3GPP NR technology based on a 3GPP system. 3GPP 6G may not limited to a Release or a specific TS document, and its name may have a different form from 3GPP 6G. That is, 3GPP 6G may mean a technology introduced after 3GPP NR and is not limited to a specific form.

The description below will mainly focus on a 3GPP NR system but is not limited thereto and may be applied to 3GPP 6G. Furthermore, what is described below may be partially modified to be used in consideration of a 3GPP 6G system and is not limited to a specific form. However, hereinafter, for convenience of explanation, the 3GPP NR system will be mainly described. For background arts, terms, abbreviations, etc. used in the present disclosure, refer to matters described in the standard documents published prior to the present disclosure. For example, reference may be made to the standard documents 36.xxx and 38.xxx.

## Overall System

As more communication devices require larger communication capacities, the need for mobile broadband communication more enhanced than the existing Radio Access Technology (RAT) is on the rise. In addition, massive machine type communication (MTC), which provides a variety of services anytime and anywhere by connecting a plurality of devices and things, is also one of main issues worthy of consideration in next-generation communication. Furthermore, a communication system design considering a service/a terminal sensitive to reliability and latency is also under discussion. Thus, introduction of a next-generation RAT considering enhanced mobile broadband communication (eMBB), massive MTC (mMTC), ultra-reliable and low latency communication (URLLC) and the like is under discussion, and for convenience, a corresponding technology is referred to as NR in the present disclosure. NR is an expression which represents an example of a 5G RAT.

A new RAT system including NR uses an OFDM transmission method or a similar transmission method. The new RAT system may follow OFDM parameters different from OFDM parameters of LTE. Alternatively, the new RAT system may follow a numerology of the existing LTE/LTE-A as it is but support a wider system bandwidth (e.g., 100 MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

In addition, a new RAT system including 6G may be considered as a next-generation RAT. The new RAT system including 6G may consider i) very high data speed per device, ii) a large number of connected devices, iii) global connectivity, iv) very low latency, v) reduction of energy consumption of battery-free IoT devices, vi) ultra-high reliability connection, and vii) a connected intelligence with machine learning ability, but is not limited thereto. The new RAT system including 6G may consider using a terahertz (THz) frequency band, that is, a frequency higher than an NR system, for a wider bandwidth and a higher transmission speed in consideration of what is described above. The RAT system including 6G may overcome an existing limitation by applying artificial intelligence/machine learning (AI/ML), but may not be limited thereto.

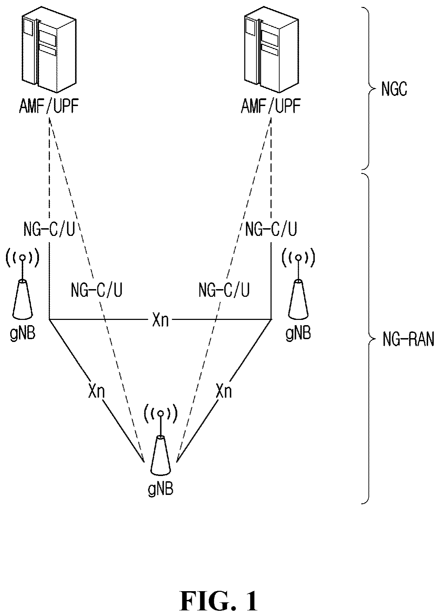

FIG. 1 exemplifies a structure of a wireless communication system applicable to the present disclosure. Referring to FIG. 1 , NG-RAN consists of gNBs that provide control plane (RRC) protocol terminations for a NG-Radio Access (NG-RA) user plane (that is, a new access stratum (AS) sublayer/packet data convergence protocol (PDCP)/radio link control (RLC)/MAC/PHY) and a UE. The gNBs are interconnected through a Xn interface. In addition, the gNBs are connected to a new generation core (NGC) through an N2 interface. More specifically, the gNBs are connected to a access and mobility management function (AMF) through an N2 interface and are connected to a user plane function (UPF) through an N3 interface. FIG. 1 may be a structure based on an NR system, the structure of FIG. 1 may be used in a 6G system either as it is or by being partially modified and is not limited to a specific form.

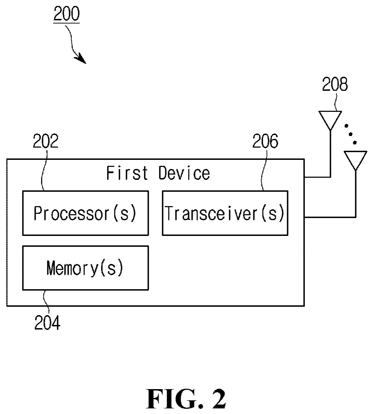

FIG. 2 illustrates an example of a wireless device applicable to the present disclosure.

Referring to FIG. 2, a wireless device 200 may transmit/receive a radio signal through various wireless access technologies (e.g., LTE, LTE-A, LTE-A pro, NR, 5G, 5G-A, 6G). The wireless device 200 may include at least one processor 202 and at least one memory 204 and additionally further include at least one transceiver 206 and/or at least one antenna 208.

The processor 202 may be configured to control the memory 204 and/or the transceiver 206 and to implement the descriptions, functions, procedures, proposals, methods, and/or operation flowcharts disclosed in this document. For example, the processor 202 may generate first information/signal by processing information in the memory 204 and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be connected to the processor 202 and store a variety of information related to an operation of the processor 202. For example, the memory 204 may store a software code including instructions for implementing some or all of processes controlled by the processor 202 or for implementing the descriptions, functions, procedures, proposals, methods, and/or operation flowcharts disclosed in this document. Herein, the processor 202 and the memory 204 may be a part of a communication modem/circuit/chip designed for implementing a wireless communication technology. The transceiver 206 may be connected to the processor 202 and transmit and/or receive a radio signal through the at least one antenna 208. The transceiver 206 may be a transmitter and/or a receiver. The transceiver 206 may be used interchangeably with a radio frequency (RF) unit. In the present disclosure, a wireless device may mean a communication modem/circuit/chip.

Hereinafter, a hardware element of the wireless device 200 will be described in further detail. Although not being limited thereto, at least one protocol layer may be implemented by the at least one processor 202. For example, the at least one processor 202 may implement at least one layer (e.g., a functional layer such as physical (PHY), media access control (MAC), radio link control (RLC), packet data convergence protocol (PDCP), radio resource control (RRC), and service data adaptation protocol (SDAP)). The at least one processor 202 may generate at least one protocol data unit (PDU) and/or at least one service data unit (SDU) according to the descriptions, functions, procedures, proposals, methods, and/or operation flowcharts disclosed in this document. The at least one processor 202 may generate a message, control information, data, or information according to the descriptions, functions, procedures, proposals, methods, and/or operation flowcharts disclosed in this document. The at least one processor 202 may generate a signal (e.g., a baseband signal) including a PDU, an SDU, a message, control information, data, or information according to a function, a procedure, a suggestion and/or a method, which are disclosed in the present document, and provide the signal to the at least one transceiver 206. The at least one processor 202 may receive a signal (e.g., a baseband signal) from the at least one transceiver 206 and obtain a PDU, an SDU, a message, control information, data, or information according to the descriptions, functions, procedures, proposals, methods, and/or operation flowcharts disclosed in this document.

The at least one processor 202 may be referred to as a controller, a microcontroller, a microprocessor, or a microcomputer. The at least one processor 202 may be implemented by hardware, firmware, software, or a combination thereof. As an example, at least one application specific integrated circuit (ASIC), at least one digital signal processor (DSP), at least one digital signal processing devices (DSPD), at least one programmable logic device (PLD), or at least one field programmable gate array (FPGA) may be included in the at least one processor 202. The descriptions, functions, procedures, proposals, methods, and/or operation flowcharts disclosed in this document may be implemented using firmware or software, and the firmware or software may be implemented to include the modules, procedures, or functions. Firmware or software configured to perform the descriptions, functions, procedures, proposals, methods, and/or operation flowcharts disclosed in this document may be included in the at least one processor 202 or may be stored in the at least one memory 204 and executed by the at least one processor 202. The descriptions, functions, procedures, proposals, methods, and/or operation flowcharts disclosed in this document may be implemented using firmware or software in the form of code, an instruction, and/or a set of instructions.

The at least one memory 204 may be connected to the at least one processor 202 and store various forms of data, signals, messages, information, programs, codes, indications, and/or instructions. The at least one memory 204 may be configured as a read only memory (ROM), a random access memory (RAM), an erasable programmable read only memory (EPROM), a flash memory, a hard drive, a register, a cache memory, a computer-readable storage media, and/or a combination thereof. The at least one memory 204 may be located at the interior and/or exterior of the at least one processor 202. In addition, the at least one memory 204 may be connected to the at least one processor 202 through various technologies such as wired or wireless connection.

The at least one transceiver 206 may transmit user data, control information, and wireless signals/channels, mentioned in the methods and/or operation flowcharts of this document, to at least one other device. The at least one transceiver 206 may receive user data, control information, and wireless signals/channels, mentioned in the descriptions, functions, procedures, proposals, methods, and/or operation flowcharts disclosed in this document, from at least one other device. For example, the at least one transceiver 206 may be connected to the at least one processor 202 and transmit and receive radio signals. For example, the at least one processor 202 may control the at least one transceiver 206 to transmit user data, control information, or a radio signal to at least one other device. In addition, the at least one processor 202 may control the at least one transceiver 206 to receive user data, control information, or a radio signal from at least one other device. In addition, the at least one transceiver 206 may be connected to the at least one antenna 208, and the at least one transceiver 206 may be configured to transmit and receive user data, control information, radio signals/channels mentioned in the descriptions, functions, procedures, proposals, methods and/or operation flowcharts disclosed in this document through the at least one antenna 208. In this document, the at least one antenna may be a plurality of physical antennas or a plurality of logical antennas (e.g., antenna ports). The at least one transceiver 206 may convert received radio signals/channels from RF band signals into baseband signals in order to process received user data, control information, and radio signals/channels using the at least one processor 202. The at least one transceiver 206 may convert the user data, control information, and radio signals/channels processed using the at least one processor 202 from the baseband signals into the RF band signals. To this end, the at least one transceiver 206 may include an (analog) oscillator and/or a filter.

The constituents of the wireless device, which are described in reference to FIG. 2, may be referred to as other terms from functional aspects. For example, the processor 202 may be referred to as a control unit, the transceiver 206 may be referred to as a communication unit, and the memory 204 may be referred to as a storage unit. In some cases, the communication unit may be used for a meaning including at least a part of the processor 202 and the transceiver 206.

The structure of the wireless device, which is described in reference to FIG. 2, may be understood as a structure of at least a part of various devices. As an example, the structure may be at least a part of various devices (e.g., a robot, a vehicle, an XR device, a hand-held device, a home appliance, an IoT device, an AI device/a server, etc.). Furthermore, according to various embodiments, apart from the constituents exemplified in FIG. 2, a device may further other constituents.

For example, a device may be a hand-held device such as a smartphone, a smart pad, a wearable device (e.g., a smart watch, smart glasses), and a hand-held computer (e.g., a laptop, etc.). In this case, the device may further include at least one of a power supply unit that supplies power and includes a wired/wireless charging circuit, a battery and the like, an interface unit including at least one port (e.g., an audio input/output port, a video input/output port) for connection to another device, and an input/output unit for inputting and outputting video information/signals, audio information/signals, data and/or information input from a user.

For example, a device may be a mobile device such as a mobile robot, a vehicle, a train, a manned/unmanned aerial vehicle (AV), and a ship. In this case, the device may further include at least one of a drive unit including at least one of the engine, motor, powertrain, wheels, brake, and steering device of the device, a power supply unit that supplies power and includes a wired/wireless charging circuit, a battery and the like, a sensor unit that senses state information of the device or surrounding the device, environment information and user information, an autonomous driving unit that performs functions such as route maintenance, speed control and destination setting, and a location measurement unit that obtains moving object location information through a global positioning system (GPS) and various sensors.

For example, a device may be an XR device such as an HMD, a head-up display (HUD) provided in a vehicle, a television, a smartphone, a wearable device, a home appliance device, a digital signage, a vehicle, and a robot. In this case, the device may further include at least one of a power supply unit that supplies power and includes a wired/wireless charging circuit, a battery and the like, an input/output unit that obtains control information and data from outside and outputs a generated XR object, and a sensor unit that senses state information of the device or surrounding the device, environment information and user information.

For example, a device may be a robot that may be classified for industrial use, medical use, domestic use, military use and the like according to purposes of use or fields. In this case, the device may further include at least one of a sensor unit that senses state information of the device or surrounding the device, environment information and user information and a drive unit that moves robot joints and performs various other physical operations.

For example, a device may be an AI device such as a TV, a projector, a smartphone, a PC, a laptop, a terminal for digital broadcasting, a tablet PC, a wearable device, a set-top box (STB), a radio, a washing machine, a refrigerator, a digital signage, a robot, and a vehicle. In this case, the device may further include at least one of an input unit that obtains various types of data from outside, an output unit that generates outputs related to sight, hearing, or touch, a sensor unit that senses state information of the device or surrounding the device, environment information and user information, and a training unit that uses learning data to learn a model consisting of artificial neural networks. The structure of the wireless device exemplified in FIG. 2 may be understood as a part of a RAN node (e.g., a base station, a DU, a RU, a RRH, etc.). That is, the device exemplified in FIG. 2 may be a RAN node. In this case, the device may further include a wired transceiver for front haul and/or back haul communication. However, in case the front haul and/or back haul communication is based on wireless communication, the at least one transceiver 206 exemplified in FIG. 2 may be used for the front haul and/or back haul communication, and no wired transceiver may be included.

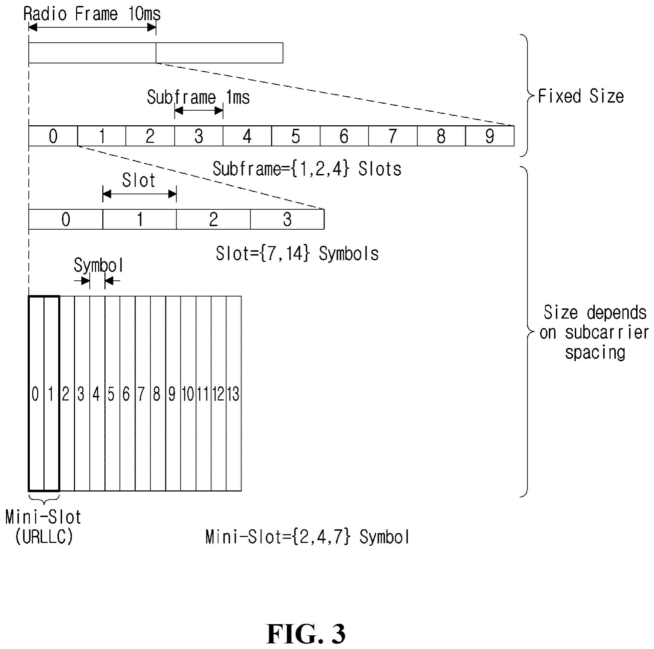

FIG. 3 exemplifies a frame structure in a wireless communication system applicable to the present disclosure.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or $\mu$). In addition, although it is assumed that a very low subcarrier spacing is not used in a very high carrier frequency, a numerology used herein may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15[kHz]$ | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15 kHz, a wide area in traditional cellular bands is supported, and when a SCS is 30 kHz/60 kHz, a dense-urban area, lower latency and a wider carrier bandwidth are supported, and when a SCS is 60 kHz or higher, a bandwidth wider than 24.25 GHz is supported to overcome a phase noise.

An NR frequency band is defined as a frequency range in two types (FR1, FR2). FR1 and FR2 may be configured as in the following Table 2. In addition, FR2 may mean a millimeter wave (mmW).

[Table 2]

| Frequency Range designation | Corresponding frequency range | Subcarrier spacing |
|---|---|---|
| FR1 | 410MHz - 7125MHz | 15, 30, 60kHz |

(continued)

| Frequency Range designation | Corresponding frequency range | Subcarrier spacing |
|---|---|---|
| FR2 | 24250MHz - 52600MHz | 60, 120, 240kHz |

Regarding a frame structure in an NR system, sizes of various fields in a time domain are expressed as multiples of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} \cdot N_f/100)T_c = 10$ ms. Here, the radio frame is configured with 10 subframes having a duration of $T_{sf} = (\Delta f_{max} \cdot N_f/1000)T_c = 1$ ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n^{\mu}_{s} \in \left\{ 0, \cdots, N^{subframe,\mu}_{slot} - 1 \right\}$ in a subframe and are numbered in an increasing order of $n^{\mu}_{s,f} \in \left\{ 0, \cdots, N^{frame,\mu}_{slot} - 1 \right\}$ in a radio frame. One slot is configured with $N^{slot}_{symb}$ consecutive OFDM symbols and $N^{slot}_{symb}$ is determined according to CP. A start of a slot $n^{\mu}_{s}$ in a subframe is temporally arranged with a start of an OFDM symbol $n^{\mu}_{s} N^{slot}_{symb}$ in the same subframe. All terminals may not perform transmission and reception at the same time, which means that not all OFDM symbols of a downlink slot or an uplink slot are available.

Table 3 represents the number of OFDM symbols per slot ( $N^{slot}_{symb}$ ), the number of slots per radio frame ( $N^{frame,\mu}_{slot}$ ) and the number of slots per subframe ( $N^{subframe,\mu}_{slot}$ ) in a normal CP and Table 4 represents the number of OFDM symbols per slot, the number of slots per radio frame and the number of slots per subframe in an extended CP.

[Table 3]

| $\mu$ | $N^{slot}_{symb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N^{slot}_{symb}$ | $N^{frame,\mu}_{slot}$ | $N^{subframe,\mu}_{slot}$ |
|---|---|---|---|
| 2 | 12 | 40 | 4 |

FIG. 3 is an example on $\mu=2$ (SCS is 60 kHz), and referring to Table 3, 1 subframe may include 4 slots. 1 subframe={1,2,4} slot shown in FIG. 3 is an example, and the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part and the like may be considered. Hereinafter, the physical resources which may be considered in an NR system will be described in detail.

First, in relation to an antenna port, an antenna port is defined so that a channel where a symbol in an antenna port is carried can be inferred from a channel where another symbol in the same antenna port is carried. When a large-scale property of a channel where a symbol in one antenna port is carried may be inferred from a channel where a symbol in another antenna port is carried, it may be said that the two antenna ports are in a quasi co-located or quasi co-location (QC/QCL) relationship. In this case, the large-scale property includes one or more of delay spread, doppler spread, frequency shift, average received power, and received timing.

In a 6G system, communication may be performed at the above-described THz band that is higher than millimeter wave (mmW) frequency, and the same frame structure as shown in FIG. 3 may be used or a separate frame structure for the 6G system may be used but is not limited to a specific form.

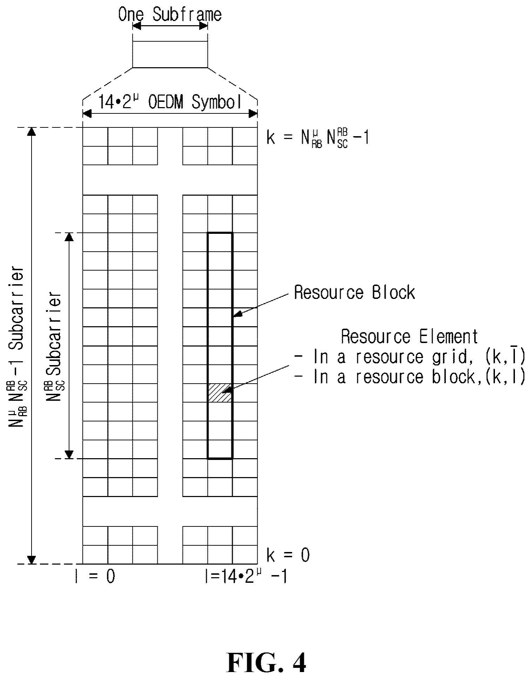

FIG. 4 exemplifies a resource grid in a wireless communication system applicable to the present disclosure.

Referring to FIG. 4, as an illustrative description, a resource grid is configured with $N_{RB}^{\mu} N_{SC}^{RB}$ subcarriers in a frequency domain, and one subframe is configured with $14 \cdot 2^{\mu}$ OFDM symbols, but the resource grid and the subframe are not limited thereto. In an NR system, a transmitted signal is described by one or more resource grids configured with $2^{\mu} N_{symb}^{(\mu)}$ OFDM symbols and $N_{RB}^{\mu} N_{SC}^{RB}$ subcarriers. Here, $N_{RB}^{\mu} \le N_{RB}^{\max,u}$. The $N_{RB}^{\max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k, l'). Here, $k=0, \ldots, N_{RB}^{\mu} N_{SC}^{RB}-1$ is an index in a frequency domain and $l'=0, \ldots, 2^{\mu} N_{symb}^{(\mu)}-1$ refers to a position of a symbol in a subframe. When referring to a resource element in a slot, an index pair (k, l) is used. Here, $l=0, \ldots, 2^{\mu} N_{symb}^{(\mu)}-1$. A resource element (k, l') for $\mu$ and an antenna port p corresponds to a complex value, $a_{k,f}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and a lowest subcarrier of a lowest resource block overlapping with a SS/PBCH block which is used by a terminal for initial cell selection. It is expressed in resource block units assuming a 15 kHz subcarrier spacing for FR1 and a 60 kHz subcarrier spacing for FR2.
- absoluteFrequencyPointA represents a frequency-position of point A expressed as in an absolute radio-frequency channel number (ARFCN).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k, l) for a subcarrier spacing configuration $\mu$ in a frequency domain is given as in the following Equation 1.

$$[Equation\ 1]$$

$$n_{CRB}^{\mu} = \left\lfloor \frac{k}{N_{sc}^{RB}} \right\rfloor$$

In Equation 1, k is defined relatively to point A so that k=0 corresponds to a subcarrier centering around point A. Physical resource blocks are numbered from 0 to $N_{BWP,i}^{size,\mu}-1$ in a bandwidth part (BWP) and i is the number of a BWP. A relationship between a physical resource block $n_{PRB}$ and a common resource block $n_{CRB}$ in BWP i is given by the following Equation 2.

$$[Equation\ 2]$$

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

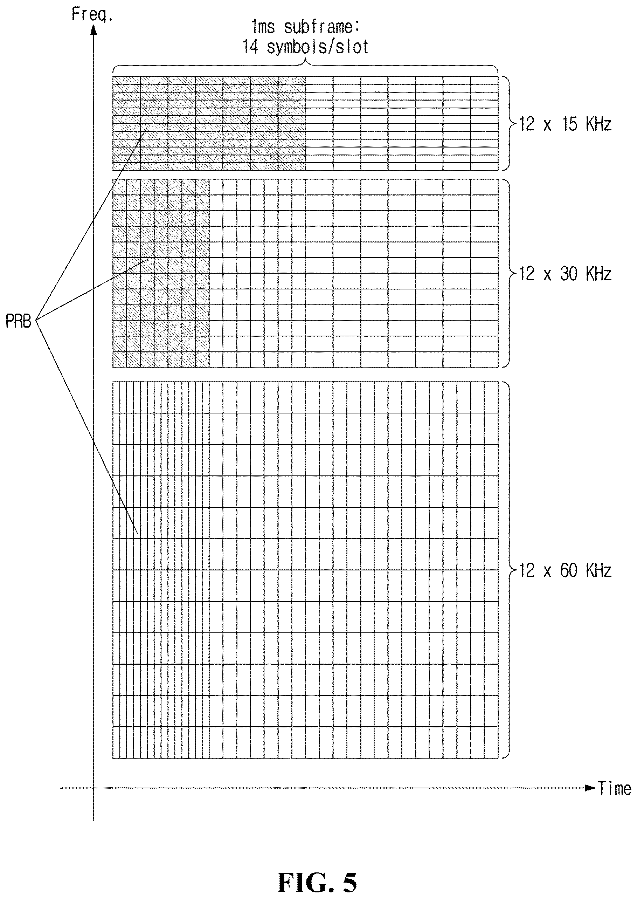

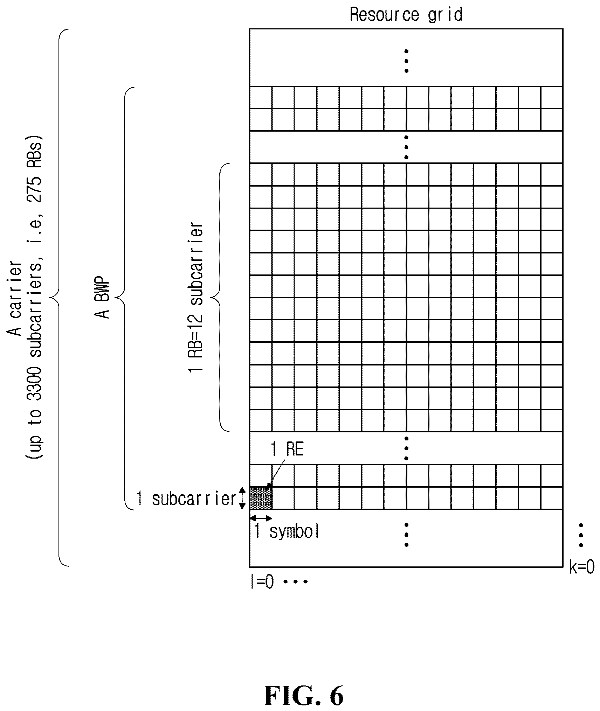

FIG. 5 exemplifies a physical resource block in a wireless communication system applicable to the present disclosure. In addition, FIG. 6 exemplifies a slot structure in a wireless communication system applicable to the present disclosure.

Referring to FIG. 5 and FIG. 6 , a slot includes a plurality of symbols in a time domain. For example, for a normal CP, one slot includes 7 symbols, but for an extended CP, one slot includes 6 symbols.

A carrier includes a plurality of subcarriers in a frequency domain. A resource block (RB) is defined as a plurality of (e.g., 12) consecutive subcarriers in a frequency domain. A bandwidth part (BWP) is defined as a plurality of consecutive (physical) resource blocks in a frequency domain and may correspond to one numerology (e.g., an SCS, a CP length, etc.). A carrier may include a maximum of N (e.g., 5) BWPs. Data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). In case a terminal operating in such a wideband CC always operates with a radio frequency (FR) chip for the whole CC being turned on, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. In this regard, a base station may instruct a terminal to operate only in a partial bandwidth, not in an overall bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured for a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with another BWP for load balancing. Alternatively, considering frequency domain inter-cell interference cancellation between neighboring cells and the like, some middle spectrums of a whole bandwidth may be excluded and BWPs on both edges may be configured in the same slot. In other words, a base station may configure at least one DL/UL BWP for a terminal associated with a wideband CC. A base station may activate at least one DL/UL BWP of configured DL/UL BWP(s) at a specific time (by L1 signaling or MAC control element (CE) or RRC signaling, etc.). In addition, a base station may indicate switching to another configured DL/UL BWP (by L1 signaling or MAC CE or RRC signaling, etc.). Alternatively, based on a timer, when a timer value is expired, it may be switched to a determined DL/UL BWP. Herein, an activated DL/UL BWP is defined as an active DL/UL BWP. However, a configuration on a DL/UL BWP may not be received when a terminal performs an initial access procedure or a RRC connection has not been set up yet, so a DL/UL BWP which is assumed by the terminal in such a situation is defined as an initial active DL/UL BWP.

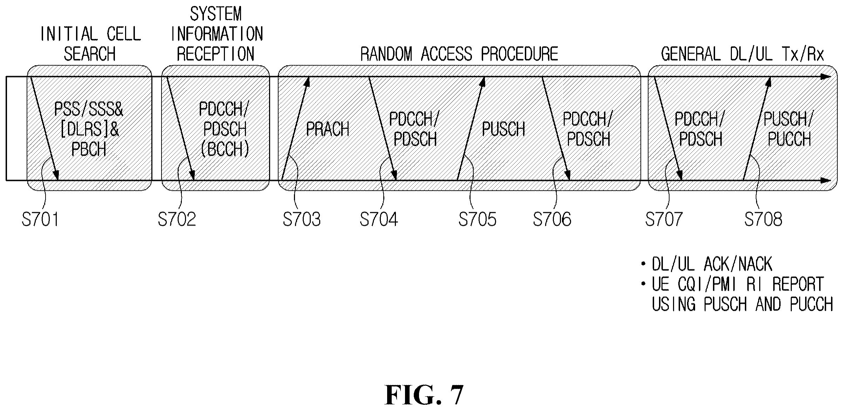

FIG. 7 illustrates examples of physical channels and an example of a general signal transmission and reception method using the physical channels used in a wireless communication system applicable to the present disclosure.

In a wireless communication system, a terminal receives information from a base station through a downlink, and the terminal transmits information to the base station through an uplink. Information transmitted and received by the base station and the terminal includes data and a variety of control information, and a variety of physical channels exist according to a type/a usage of information transmitted and received by them.

When a terminal is turned on or newly enters a cell, the terminal performs an initial cell search including synchronization with a base station (S701). To this end, the terminal may synchronize with the base station by receiving a primary synchronization signal (PSS) and a secondary synchronization signal (SSS) from the base station and obtain information such as a cell identifier (ID) and the like. Next, the terminal may obtain broadcasting information in a cell by receiving a physical broadcast channel (PBCH) from the base station. Meanwhile, the terminal may check out a downlink channel state by receiving a downlink reference signal (DL RS) at the initial cell search step.

The terminal, which has completed initial cell search, may obtain more detailed system information by receiving a physical downlink control channel (PDCCH) and a physical downlink shared channel (PDSCH) according to information carried in the PDCCH (S702).

Meanwhile, in case the terminal accesses to the base station for the first time or does not have a radio resource for signal transmission, the terminal may perform a random access procedure (RACH) for the base station (S703 to S706). To this end, the terminal may transmit a specific sequence as a preamble through a physical random access channel (PRACH) (S703 and S705) and receive a response message for the preamble through a PDCCH and a corresponding PDSCH (S704 and S706). In the case of a contention-based RACH, a contention resolution procedure may be additionally performed.

The terminal, which has performed the above-described procedure, may subsequentially perform PDCCH/PDSCH reception (S707) and physical uplink shared channel (PUSCH)/physical uplink control channel (PUCCH) transmission (S708) as a general uplink/downlink signal transmission procedure. In particular, the terminal receives downlink control information (DCI) through a PDCCH. Herein, the DCI includes control information such as resource allocation information for the terminal and has a different format depending on its purpose of use.

Meanwhile, control information, which is transmitted by the terminal to the base station through an uplink or is received by the terminal from the base station, includes a downlink/uplink acknowledgement/non-acknowledgement (ACK/NACK) signal, a channel quality indicator (CQI), a precoding matrix indicator (PMI), a rank indicator (RI), and the like. For a 3GPP LTE system, the terminal may transmit control information of the above-described CQI/PMI/RI and the like through a PUSCH and/or a PUCCH.

## Specific Embodiments of the Present Disclosure

Hereinafter, the present disclosure relates to allocation of a frequency resource in a wireless communication system and to a technology for allocating a resource to a terminal using a limited bandwidth and indicating the allocated resource. Specifically, the present disclosure relates to generating and/or interpreting resource allocation information indicating a bandwidth larger than a maximum allowed bandwidth and presents various embodiments for specifying a frequency resource in the maximum allowed bandwidth from the resource allocation information indicating the bandwidth larger than the maximum allowed bandwidth.

5G NR is a technology of providing a service based on three main technologies of Enhanced Mobile Broadband (eMBB), URLLC, and massive Internet of Thing (mIoT). mIoT may be considered a terminal device form with optimized power consumption based on a small size and low power rather than carrier aggregation (CA) that is technically directed to requiring a maximum throughput (max T-put) rate transmission with high performance. In 5G NR, apart from URLLC, eMBB and mIoT, there may be a hybrid type of those three technologies. In 3GPP Release-17, when a smart factory or a wearable device is a target, a new device type requiring low power and URLLC or a certain level of speed may be needed. This type of device is referred to as a reduced capability (Redcap) UE or a Redcap terminal.

As for frequency resource, unlike the existing device, a Redcap UE uses a narrow spectrum or bandwidth (BW). Specifically, a Redcap UE uses a maximum of 20 MHz or 5 MHz BW, instead of 100 MHz BW, and this case may reduce power consumption and save cost. That is, for a Redcap terminal using a 20 MHz BW of the 3GPP Release 17, in order to save some memory cost, resource allocation may be restricted to a range of N or less RBs, not using the whole BWP for a PxSCH channel. Thus, the present disclosure proposes a technology for effectively operating a terminal with allocated RBs not exceeding a limited number of RBs in a situation where there is a limitation on the throughput (T-put) of a PxSCH (e.g., a shared channel including PDSCH and PUSCH).

The present disclosure relates to a terminal using a narrow bandwidth and proposes a technology for a situation where a specific number of RBs is imposed as a restriction only for a PxSCH channel in a terminal using a maximum BWP of 20 MHz instead of a maximum BWP of 100 MHz that is typically used by a device. Herein, the specific number of RBs should be smaller than a total number of RBs of the BWP. In this case, there may be no change in a control channel (e.g., PDCCH, PUCCH, SRS, PRACH) from the existing perspective of L1, and a BW or a BWP will be maintained at a maximum of 5 MHz for a downlink PDSCH or an uplink PUSCH in order to reduce a T-put or a buffer.

To this end, FDRA may be allocated in a range not exceeding an allowed number of RBs, or FDRA may be allocated without considering the allowed number of RBs, and if the allocated RBs exceed the allowed number of RBs, post-processing may be performed. As an example of post-processing, while an existing allocation scheme of FDRA is followed, it is possible to apply a scheme that does not allocate data to RBs beyond the allowed number of RBs after channel coding. Herein, a structure of FDRA is different according to a resource allocation (RA) type. Herein, only for a RA type 1, a scheme of limiting allocated RBs to an allowed number or below may be considered. However, a specification may define only the RA type 1 to be applicable, but a scheme is needed to determine how RBs beyond the allowed number are to be processed when other RA types are applied. The present disclosure proposes a technology for processing RBs beyond an allowed number for a PDSCH and a PUSCH that are a PxSCH for unicast. Unicast is scheduled typically by DCI that is scrambled as a C-RNTI, an MCS-C-RNTI, a CS-RNTI, a TC-RNTI, etc.), but the proposed technology may also be applied to a configured grant (CG) without PDCCH.

In case every channel of a Redcap terminal is operated within a BWP of 20 MHz, a scheme of allocating a maximum of 100 MHz within a corresponding BWP may be applied for FDRA allocation, which is not significantly different from the existing scheme. However, in case only a specific channel is limited to a 5 MHz range in a device using a BWP of up to 20 MHz, a different scheme from the existing resource allocation may be needed. As only a specific channel is limited to the 5 MHz range, an additional change in frequency hoping may be needed.

FDRA is defined by two types: resource allocation (RA) type 0 and RA type 1. Type 1 is a scheme of grouping RBs and indicating in frequency domain whether each RBG is used. Type 1 is a scheme of designating a start RB index and a length, which is a BW, through a special equation by using a resource indication value (RIV).

RA type 0 is also referred to as a bitmap scheme and is a scheme of indicating whether or not RBGs are used by using each bit. Referring to TS 38.213, the sizes of RBGs are determined according to a BW of a BWP, and a bit value of 1 indicates allocation of a corresponding RBG, and a bit value of 0 indicates that the corresponding RBG is not allocated. Hereinafter, Table 5 shows definitions of RBG size according to the size of a BWP.

[Table 5]

| BWP size | configuration 1 | configuration 1 |
|---|---|---|
| 1-36 | 2 | 4 |
| 37-72 | 4 | 8 |
| 73-144 | 8 | 16 |
| 145-275 | 16 | 16 |

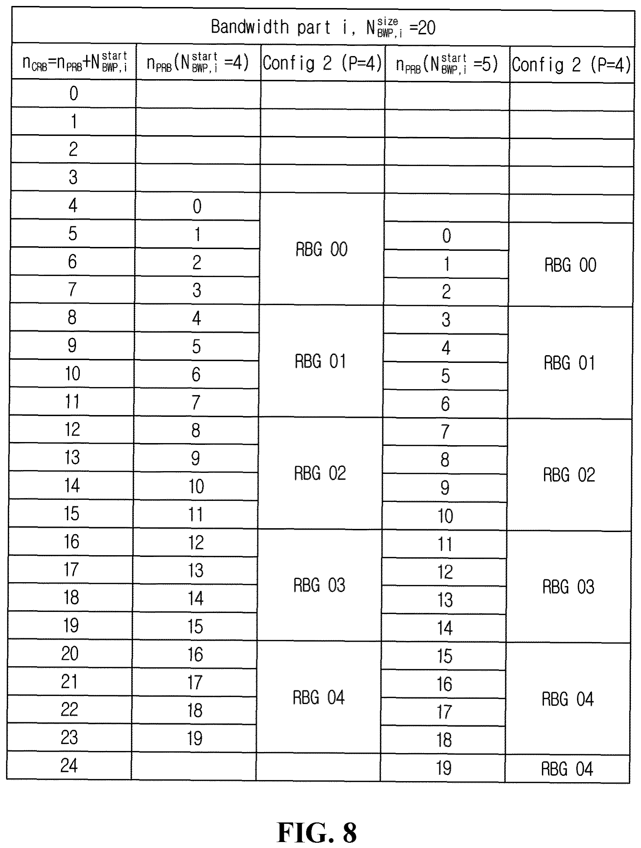

Referring to Table 5, if a size of a BWP is 50 RBs, a size of a RBG is 4 RBs. An example of a corresponding RGB definition may be as shown in FIG. 8. FIG. 8 illustrates an example of PRB allocation per RBG according to RA type 0 that is applicable to the present disclosure. FIG. 8 shows an example of allocation per RBG of a bitmap according to RA type 0. As shown in FIG. 8, 4 RBs are grouped into one RGB, and DCI uses a FDRA field to indicate whether or not a corresponding RBG is used. For example, if FDRA has a value of '0100......', it means that a second RGB is allocated and the remaining RBGs are not allocated.

That is, according to RA type 0, a size of a RBG is determined depending on a size of a BWP, and one bit in a bitmap indicates whether or not a corresponding RBG is allocated, by using values of 1 and 0. Depending on a size of a BWP and a size of a RBG, a bit size of an FDRA field of DCI may be different. For example, in the case of a 15 KHz subcarrier spacing (SCS) for 100 MHz of FR1, the FDRA field may include a maximum of 18 bits.

Unlike RA type 0, RA type 1 uses a RIV to indicate a start index of a RB and how many RBs are consecutively used. A value of RIV represents a value, which is determined using a predefined equation, in a binary form. Generally, as compared with the above-described bitmap form, a bit size of an FDRA field used in DCI may be smaller. In the case of RA type 1, consecutive RBs may be allocated, or for the effect of frequency diversity, two sets of RBs may be distributed into different frequency domains.

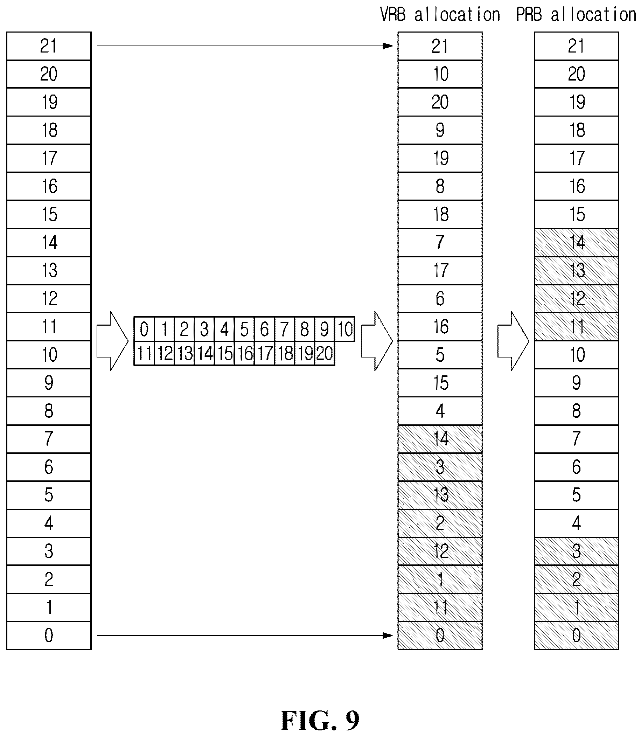

FIG. 9 illustrates an example of PRB allocation according to RA type 1 that is applicable to the present disclosure. FIG. 9 shows an example of a result of distributing RBs into different frequency domains in RA type 1. Referring to FIG. 9, in case non-interleaved VRB-to-PRB mapping in a RIV scheme is identical, leftmost RB indexes are grouped into RB bundles, and indexes are designated for the RB bundles. By using a start RB and a size that are determined based on a calculation formula of RIV, RBs or a RB bundle is placed. A size of a RB bundle may be set to one of 1, 2 and 4 by RRC layer signaling. In this case, RBs of PDSCH, which are actually allocated, may be consecutively placed. However, for the effect of frequency diversity, it is possible to divide one bundle into two parts and separate them from each other. This is possible when interleaved VRB-to-PRB mapping is performed. Table 6 described the division of a bundle.

[Table 6]

Interleaver matrix has 2 rows, and the number of columns is derived by the number of rows and the number of RB bundle within carrier BWP
• Write RB bundle on interleaver matrix column by column first
• Read RB bundle from interleaver matrix row by row

The present disclosure proposes a technology for a service that should use N or less RBs for unicast PxSCH, which are less than M RBs available in a BWP. That is, according to various embodiments of the present disclosure, the proposed technology may be applied to a case where the number of RBs within an allocated RBG is equal to or greater than N, and if N or less RBs are allocated, the RBs may not be removed.

**Embodiment #1: a bitmap scheme of RA type 0 where use of some RBs is adjusted so that an equal or smaller number of RBs compared to a maximum number of available RBs are used after RDRA allocation for a channel of PxSCH.**

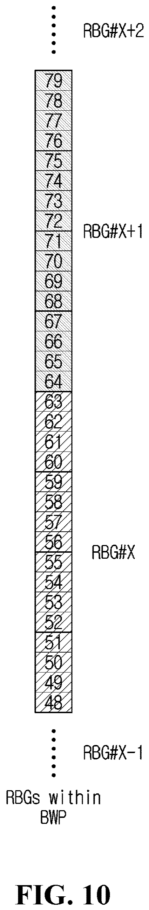

In the bitmap scheme of RA type 0, a RGB size is defined according to a BWP size. However, according to various embodiments of the present disclosure, in preparation for a R17 Redcap device type, not all available (P)RBs within a BWP are allocated for a PxSCH (e.g., PDSCH and PUSCH) channel, but a limited number of top RBs or a predefined number of RBs may be allocated. FIG. 10 illustrates an example of RB allocation according to a RBG size in a situation where an SCS is 15 KHz. However, as shown in FIG. 10, RBGs may not be continuous.

For example, in a 15 KHz SCS environment, in case a RBG size is set to 16, the number of RBs allocated according to the RBG size may become a multiple of 16. Herein, when a max scheduled transmission BW (e.g., 5 MHz PRBs) in a Redcap terminal is limited to 25 RBs, a measure is required for some RBs within a RBG. In a possible way, for at least one specific RB within the RBG, no data may be allocated after channel coding, or puncturing may be performed after data is allocated. Specifically, as shown in FIG. 10, in case two RBGs, that is, 32 PRBs are allocated with an SCS of 15 KHz, the number of the allocated PRBs exceeds 24. Accordingly, when as many RBs as a multiple of a RBG are allocated according to RA type 0, if the number of PRBs is limited by a max scheduled transmission BW (e.g., 5 MHz PRBs), the present disclosure describes various embodiments regarding how to process RBs allocated in RBG units based on a maximum number of RBs.

According to various embodiments, in case a total number of RBs included in a resource allocated on a frequency axis indicated by signaling, that is, included in an allocated RGB, is greater than a maximum number of allowed RBs (e.g., a maximum number of RBs capable of being included in a 5 MHz BW), a base station and a terminal may remove at least one RB of RBs indicated by frequency resource allocation information and treat only the remaining RBs as allocated ones.

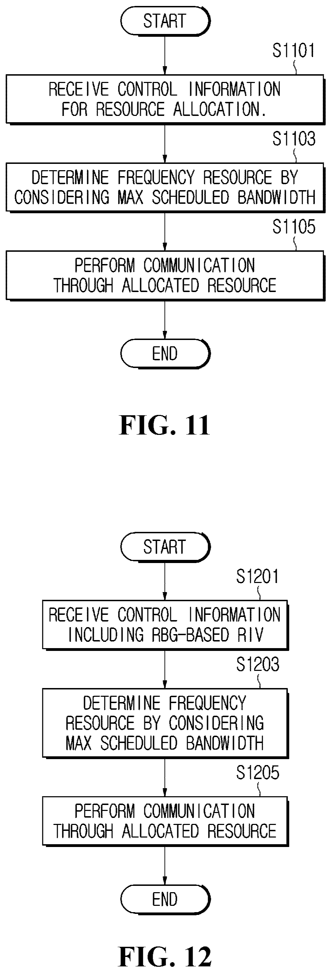

FIG. 11 illustrates an example of a procedure of performing communication through a frequency resource according to an embodiment of the present invention. FIG. 11 exemplifies a method performed by a terminal.

Referring to FIG. 11, at step S1101, a terminal receives control information for resource allocation. The control information may include DCI, and the DCI may include scheduling information for a PDSCH or a PUSCH. Herein, the scheduling information includes information on an allocated frequency resource. For example, the frequency resource may be indicated by a RDRA field included in the DCI. Herein, the FDRA field may indicate RBs exceeding the number of RBs corresponding to a max scheduled bandwidth allowed to the terminal (hereinafter, 'maximum number of RBs').

At step S1103, the terminal determines the frequency resource by considering the max scheduled bandwidth. In case the scheduling information in the control information received at step S1101 indicates a smaller or equal number of RBs compared to the maximum number of RBs, the terminal may determine that the RBs indicated by the scheduling information are allocated. On the other hand, in case the scheduling information in the control information indicates a larger number of RBs compared to the maximum number of RBs, the terminal may remove at least one RB of the indicated RBs and determine that the remaining RBs equal to or smaller than the maximum number of RBs are allocated. Herein, a rule of removing the at least one RB may be defined in various ways.

At step S1105, the terminal performs communication through an allocated resource. That is, the terminal may transmit or receive a signal through the allocated frequency resource. The terminal may identify a frequency resource and/or a time resource indicated by the control information and transmit or receive a signal through the identified resource. That is, in transmission, the terminal may generate a signal by performing processing such data encoding, modulation and the like and map the signal to the allocated resource and then transmit the signal. In reception, the terminal may demap the signal from the allocated resource and reconstruct data by performing processing such as demodulation, decoding and the like on the demapped signal.

As described with reference to FIG. 11, in case RBs indicated by scheduling information are more than a maximum number of RBs, at least one RB may be removed according to a predefined or preset rule. Herein, as the rule for RB removal (heinafter, 'RB removal rule') is shared between a base station and a terminal and the base station may also recognize that the terminal is a terminal with a limited bandwidth, the base station may also set information on a frequency resource, that is, a value of a FDRA field by considering at least one removed RB. Hereinafter, the present disclosure will described further detailed embodiments for generating information on a frequency resource.

Embodiment #1-1: a terminal and/or a base station selects a number of RBs of a max scheduled transmission BW (e.g., 5 MHz PRBs) by removing at least one RB in ascending order of RB index from a lowest RB index of a RBG with a lowest RBG index among allocated RBGs. For example, in FIG. 10, in case a max scheduled transmission BW (e.g., 5 MHz PRBs) includes 25 PRBs, the terminal and/or the base station treats No. 48 to No. 54 PRBs as not allocated.

Embodiment #1-2: a terminal and/or a base station selects a number of RBs of a max scheduled transmission BW (e.g., 5 MHz PRBs) by removing at least one RB in descending order of RB index from a highest RB index of a RBG with a highest RBG index among allocated RBGs. For example, in FIG. 10, in case a max scheduled transmission BW (e.g., 5 MHz PRBs) is 25 PRBs, the terminal and/or the base station treats No. 73 to No. 79 PRBs as not allocated.

Embodiment #1-3: when at least one PRB is removed sequentially in descending order from a highest index or in ascending order from a lowest index among allocated PRBs, a rule of removing at least one RB either in descending order from a highest index or in ascending order from a lowest index may be configured or predefined in an upper layer (e.g., RRC).

In case a RB removal rule is predefined, removal may start from an outermost RB (e.g., a RB with a lowest or highest index) within a RBG containing a larger number of RBs of RBGs at both ends. If the RBGs at both ends contain a same number of RBs, removal may start from a predefined one of a PRB with a lowest index and a PRB with a highest index. Alternatively, if the RBGs at both ends contain a same number of RBs, a PRB with a lowest index and a PRB with a highest index may be removed alternately. In other words, PRBs equal to or less than a max scheduled transmission BW (e.g., 5 MHz PRBs) may be selected by sequentially removing PRBs alternately at both ends, that is, by initially removing an outermost PRB of a RBG opposite to a RBG with an outermost PRB being removed.

In case a RB removal rule is predefined, removal may start from an outermost RB (e.g., a RB with a lowest or highest index) within a RBG containing a smaller number of RBs of RBGs at both ends. If the RBGs at both ends contain a same number of RBs, removal may start from a predefined one of a PRB with a lowest index and a PRB with a highest index. Alternatively, if the RBGs at both ends contain a same number of RBs, a PRB with a lowest index and a PRB with a highest index may be removed alternately. In other words, PRBs equal to or less than a max scheduled transmission BW (e.g., 5 MHz PRBs) may be selected by sequentially removing PRBs alternately at both ends, that is, by initially removing an outermost PRB of a RBG opposite to a RBG with an outermost PRB being removed.

Embodiment #1-4: a rule for removing a PRB may be signaled dynamically or quasi-fixedly through DCI or MAC CE. Specifically, whether a removal operation is to be performed sequentially from a PRB with a highest index, sequentially from a PRB with a lowest index, or alternately between the PRB with the highest index and the PRB with the lowest index may be signaled dynamically or quasi-fixedly through DCI or MAC CE.

According to the above-described embodiments, other RBGs than a first RBG and a last RBG may not have a full RB size either. In addition, a RBG with a lowest allocated index and a RBG with a highest allocated index may include a first RBG and a last RBG.

## Embodiment #2: a compact scheme of FDRA using DCI X 2 (e.g., a combination of a bitmap and a RIV) where use of some RBs is adjusted so that an equal or smaller number of RBs compared to a maximum number of available RBs are used after RDRA allocation for a channel of PxSCH.

As shown in Table 7 below, a RIV scheme of RA type 1 indicates a start index of RB and the number or length of RBs. Accordingly, in case the number of RBs corresponding to a max scheduled transmission BW (e.g., 5 MHz PRBs) is indicated for a unicast PxSCH, since it is possible to set the number and length of RBs to be equal to or less than the number of RBs (hereinafter, 'a maxim number of RBs) corresponding to a max scheduled bandwidth, which is allowed for a terminal, the RB removal scheme for RA type 0 described in Embodiment #1 may be unnecessary.

[Table 7]

A downlink type I resource allocation field consists of a resource indication value ($RIV$) corresponding to a starting virtual resource block ( $RB_{start}$ ) and a length in terms of contiguously allocated resource blocks $L_{RBs}$ .

The resource indication value is defined by

$$\text{if } (L_{RBGs} - 1) \leq \lfloor N_{RBG} / 2 \rfloor \quad \text{then}$$

$$RIV = N_{RBG}(L_{RBGs} - 1) + RBG_{start}$$

$$\text{else}$$

$$RIV = N_{RBG}(N_{RBG} - L_{RBGs} + 1) + (N_{RBG} - 1 - RBG_{start})$$

where $L_{RBs} \geq 1$ and shall not exceed $N_{BWP}^{size} - RB_{start}$.

However, an allocation scheme of FDRA according to compact DCI of RA type 1, which is introduced since 3GPP Release-16, generates a RIV with a RBG form, not a RB form, as defined in TS 38.214 document extracted in Table 8 below, and thus a bit number of FDRA may be reduced.

[Table 8]

When the scheduling grant is received with DCI format 1_2, a downlink type 1 resource allocation field consists of a resource indication value ($RIV$) corresponding to a starting resource block group $RHG_{start}$=0, 1, ..., $N_{RBG}$-1 and a length in terms of virtually contiguously allocated resource block groups $L_{RBGs}$=1, ..., $N_{RBG}$, where the resource block groups are defined as in 5.1.2.2.1 with P defined by *ResourceAllocationType1-granularity-ForDCIFormat1_2* if the UE is configured with higher layer parameter *ResourceAllocationType1-granularity-ForDCIFormal1_2,* and $P$=1 otherwise. The resource indication value is defined by

(continued)

$$\text{if } (L_{RBs} - 1) \le \left\lfloor N_{BWP}^{size} / 2 \right\rfloor \text{ then}$$

$$RIV = N_{BWP}^{size} (L_{RBs} - 1) + RB_{start}$$

$$\text{else}$$

$$RIV = N_{BWP}^{size} (N_{BWP}^{size} - L_{RBs} + 1) + (N_{BWP}^{size} - 1 - RB_{start})$$

In this case, a resource should be allocated not to exceed the number of RBs corresponding to a max scheduled transmission BW (e.g., 5 MHz PRBs) after a RBG is configured. Herein, after the RBS is configured, a rule of removing a RB among RBs indicated by signaling may follow the above-described Embodiment #1.

FIG. 12 illustrates an example of a procedure of performing communication through a frequency resource according to an embodiment of the present disclosure. FIG. 12 exemplifies a method performed by a terminal.

Referring to FIG. 12, at step S1201, a terminal receives control information including a RBG-based RIV. The control information includes DCI, and the DCI is resource allocation information according to a compact scheme of FDRA and may include scheduling information for a PDSCH or a PUSCH. Herein, the scheduling information may include information on an allocated frequency resource, and the frequency resource may be indicated by a RBG-based RIV field in the DCI. Herein, the RBG-based RIV field may indicate RBs exceeding the number of RBs (hereinafter, 'a maximum number of RBs) corresponding to a max scheduled bandwidth, which is allowed for the terminal.

At step S1203, the terminal determines the frequency resource by considering the max scheduled bandwidth. In case the scheduling information in the control information received at step S1201 indicates a smaller or equal number of RBs compared to the maximum number of RBs, the terminal may determine that the RBs indicated by the scheduling information are allocated. On the other hand, in case the scheduling information in the control information indicates a larger number of RBs compared to the maximum number of RBs, the terminal may remove at least one RB of the indicated RBs and determine that the remaining RBs equal to or smaller than the maximum number of RBs are allocated. Herein, a rule of removing the at least one RB may be defined in various ways.

At step S1205, the terminal performs communication through an allocated resource. That is, the terminal may transmit or receive a signal through the allocated frequency resource. The terminal may identify a frequency resource and/or a time resource indicated by the control information and transmit or receive a signal through the identified resource. That is, in transmission, the terminal may generate a signal by performing processing such data encoding, modulation and the like and map the signal to the allocated resource and then transmit the signal. In reception, the terminal may demap the signal from the allocated resource and reconstruct data by performing processing such as demodulation, decoding and the like on the demapped signal.

As described with reference to FIG. 12, in case RBs indicated by scheduling information are more than a maximum number of RBs, at least one RB may be removed according to a predefined or preset rule. Herein, as the rule for RB removal (heinafter, 'RB removal rule') is shared between a base station and a terminal and the base station may also recognize that the terminal is a terminal with a limited bandwidth, the base station may also set information on a frequency resource, that is, a value of a RBG-based RIV field by considering at least one removed RB. Hereinafter, the present disclosure will described further detailed embodiments for generating information on a frequency resource.

Embodiment #2-1: a terminal and/or a base station selects a number of RBs of a max scheduled transmission BW (e.g., 5 MHz PRBs) by removing at least one RB in ascending order of RB index from a lowest RB index of a RBG with a lowest RBG index among allocated RBGs. For example, in FIG. 10, in case a max scheduled transmission BW (e.g., 5 MHz PRBs) includes 25 PRBs, the terminal and/or the base station treats No. 48 to No. 54 PRBs as not allocated.

Embodiment #2-2: a terminal and/or a base station selects a number of RBs of a max scheduled transmission BW (e.g., 5 MHz PRBs) by removing at least one RB in descending order of RB index from a highest RB index of a RBG with a highest RBG index among allocated RBGs. For example, in FIG. 10, in case a max scheduled transmission BW (e.g., 5 MHz PRBs) is 25 PRBs, the terminal and/or the base station treats No. 73 to No. 79 PRBs as not allocated.

Embodiment #2-3: when at least one PRB is removed sequentially in descending order from a highest index or in ascending order from a lowest index among allocated PRBs, a rule of removing at least one RB either in descending order from a highest index or in ascending order from a lowest index may be configured or predefined in an upper layer (e.g., RRC).

In case a RB removal rule is predefined, removal may start from an outermost RB (e.g., a RB with a lowest or highest index) within a RBG containing a larger number of RBs of RBGs at both ends. If the RBGs at both ends contain a same number of RBs, removal may start from a predefined one of a PRB with a lowest index and a PRB with a highest index. Alternatively, if the RBGs at both ends contain a same number of RBs, a PRB with a lowest index and a PRB with a highest index may be removed alternately. In other words, PRBs equal to or less than a max scheduled transmission BW (e.g., 5 MHz PRBs) may be selected by sequentially removing PRBs alternately at both ends, that is, by initially removing an outermost PRB of a RBG opposite to a RBG with an outermost PRB being removed.

In case a RB removal rule is predefined, removal may start from an outermost RB (e.g., a RB with a lowest or highest index) within a RBG containing a smaller number of RBs of RBGs at both ends. If the RBGs at both ends contain a same number of RBs, removal may start from a predefined one of a PRB with a lowest index and a PRB with a highest index. Alternatively, if the RBGs at both ends contain a same number of RBs, a PRB with a lowest index and a PRB with a highest index may be removed alternately. In other words, PRBs equal to or less than a max scheduled transmission BW (e.g., 5 MHz PRBs) may be selected by sequentially removing PRBs alternately at both ends, that is, by initially removing an outermost PRB of a RBG opposite to a RBG with an outermost PRB being removed.

Embodiment #2-4: a rule for removing a PRB may be signaled dynamically or quasi-fixedly through DCI or MAC CE. Specifically, whether a removal operation is to be performed in one direction from a PRB with a highest index, in one direction from a PRB with a lowest index, or alternately between the PRB with the highest index and the PRB with the lowest index may be signaled dynamically or quasi-fixedly through DCI or MAC CE.

Embodiment #2-5: a base station may perform scheduling within a maximum number of RBs that may be allocated. In this case, a terminal does not expect that a product of a RBG size and a contiguously allocated RBG length will exceed the maximum number of RBs (e.g., 25 RBs with a 15 SCS).

According to the above-described embodiments, other RBGs than a first RBG and a last RBG may not have a full RB size either. In addition, a RBG with a lowest allocated index and a RBG with a highest allocated index may include a first RBG and a last RBG.

## Embodiment #3: a scheme of allocating information after channel coding for removed RBs

This embodiment relates to how channel-coded data are to be allocated to removed RBs after the RBs are removed according to the above-described embodiments. According to various embodiments, two schemes of rate matching and puncturing may be considered. Rate matching is a scheme where an MAC considers the number of removed RB(s) and allocates a TB size based on the number of REs included in remaining RB(s). Puncturing is a scheme where an MAC allocates a TB size based on the number of REs included in RBs allocated by FDRA before at least one RB is removed. Herein, in case rate matching is applied, a size of an available physical resource is signaled as A, but if an actual size of a resource is smaller than A, performance degradation may be great. Accordingly, in case rate matching is applied, a base station or a terminal may have to consider further matters when allocating a TB size.

Embodiment #3-1: predefined rate matching is applied for removed RBs.

Embodiment #3-2: predefined puncturing is applied for removed RBs.

Embodiment #3-3: application of one of rate matching and puncturing for removed RBs may be indicated by a base station. For example, it may be notified by upper layer signaling, DCI or an MAC CE. In this case, a terminal may receive information indicating one of rate matching and puncturing and perform rate matching or puncturing for uplink data. Alternatively, the base station may transmit information indicating one of rate matching and puncturing and perform rate matching and puncturing for downlink data.

Embodiment #3-4: rate matching or puncturing may be applied according to the number of removed RBs. For example, if the removed RBs exceed a predetermined number, rate matching may be applied, and if the removed RBs does not exceed the predetermined number, puncturing may be applied. Herein, the predetermined number used as a threshold may be set or predefined by RRC signaling. When being predefined, the predetermined number may be different according to a RBG size. In this case, a terminal and/or a base station may select one of rate matching and puncturing based on the number of removed RBs and perform rate matching or puncturing for transmitted data.

Embodiment #3-5: puncturing or rate matching may be applied based on a ratio of the number of removed RBs to the number of RBs of an allocated RBG. The ratio used a threshold may be predefined or set by RRC signaling. In this case, a terminal and/or a base station may select one of rate matching and puncturing based on a ratio of the number of removed RBs to the number of RBs indicated by resource allocation information and perform rate matching or puncturing for transmitted data.

## Embodiment #4: various other proposals

The present disclosure proposes additional operations for the proposed embodiments. A typical value (e.g., N) may be determined for the number of RBs corresponding to a max scheduled transmission BW (X MHz PRBs). For example, as for the value of N, 25 PRBs may be considered for 15 KHz SCS, 11 or 12 PRBs may be considered for 30 KHz SCS, and other numbers may be considered.

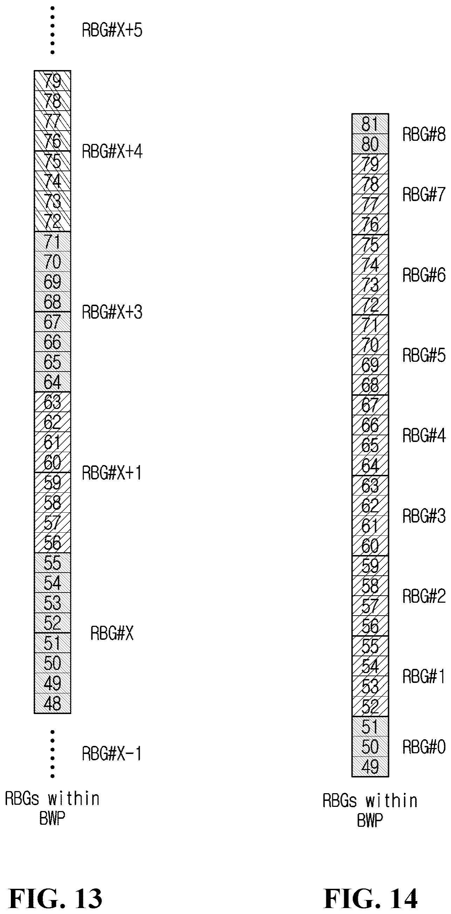

In addition to the above-described Embodiment #1, as shown in FIG. 13, in case a RBG size is 8 and a first RBG includes 1 RB or a last RBG include 1 RB, when a RB of RBGs consisting of 1 RB is removed, the entire RBG is removed.

Accordingly, in case a RBG is removed due to removal of a RB, a next allocated RBG adjacent thereto has a full size with high probability and thus a RB may be removed from the adjacent RBG. Relevant detailed embodiments are as follows.

Embodiment $4-1: when following a scheme where PRBs are removed one by one in one direction from a PRB with a highest index or a lowest index, if the number of RBs within a RBG with a first index or a last index is a partial RBG smaller than a RBG size, the RBG may be excluded from RB removal. However, as shown in FIG. 14, in case a RBG size is 4 and a first RBG (e.g., RGB#0) or a last RBG (e.g., RGB#8) includes 3 RBs or 2 RBs, if a RBG is maintained even after 1 RB is removed, the first RBG and the last RBG may not be excluded from RB removal.

Embodiment #4-2: in Embodiment #1 described above, in case a first RBS and a last RBG do not include a full RB number but a corresponding RBG includes at least one RB even after removal of RBs, the RBG may not be excluded from RB removal. For example, in FIG. 14, No. 49 RB and No. 81 RB may be removed.

The above-described Embodiment #4-1 and Embodiment #4-2 may also be applied to a situation where a RB with a lowest PRB index and a RB with a highest PRB index are removed alternately. In addition, in case DCI X_2 is used according to the above-described Embodiment #2, the above-described scheme may be applied regarding whether a first RBG or a last RBG is to be included as a target of RB removal. That is, in case Embodiment #2 is applied, if RB removal makes a corresponding RBG removed, the RBG may be excluded from the target of RB removal.

Embodiment #4-3: when following a scheme where PRBs are removed one by one in one direction from a PRB with a highest index or a lowest index, if the number of RBs within a RBG with a first index or a last index is smaller than a RBG size, the RBG may be excluded from the target of RB removal. However, in case a RBG size is 4 and a first RBG or a last RBG includes 3 RBs, if a RBG is maintained even after 1 RB is removed either from the first RBG or the last RBG, the first RBG and the last RBG may not be excluded from the target of RB removal.

Embodiment #4-4: in case a first RBS and a last RBG do not include a full RB number but at least one RB remains in a corresponding RBG even after removal of RBs, the RBG may not excluded from the target of RB removal. For example, in FIG. 14, No. 49 RB and No. 81 RB may be removed. This embodiment may also be applied to a case where PRBs with a lowest PRB index and a highest PRB index are alternately removed in the above-described Embodiment #4-3 and Embodiment #4-4.

Embodiment #4-5: a scheme of limiting RBs used to a typical value N for the number of RBs corresponding to a max scheduled transmission BW (X MHz PRBs) by removing RBs may be applied only to a case where a RBG size equal to or greater than a specific value is used. For example, in case a RBG size is 8 with 30 KHz SCS and 16 with 15 KHz SCS, the RB removal scheme may be applied. Furthermore, the above-described PRB removal scheme may also be applied to configured scheduling, not scheduling of a PDCCH.

The above-described embodiments mainly considered a case where one unicast channel exceeds the number of PRBs corresponding to a 5 MHz BW. However, there may be a situation where two channels are simultaneously received within one slot, for example, as described in Table 9 below, there may be a situation where a unicast and paging PDSCH and an SIB PDSCH are simultaneously received. Even in case specific OFDM symbols overlap each other and the number of PRBs corresponding to a 5MHz BW is exceeded, like in the above-described embodiments, PRBs exceeding a limitation may be removed to limit the number of RBs.

[Table 9]

| |
| --- |
| On a frequency range 1 cell, the UE shall be able to decode a PDSCH scheduled with C-RNTI, MCS-C-RNTI, or CS-RNTI and, during a process of P-RNTI triggered SI acquisition, another PDSCH scheduled with SI-RNTI that partially or fully overlap in time in non-overlapping PRBs, unless the PDSCH scheduled with C-RNTI, MCS-C-RNTI, or CS-RNTI requires Capability 2 processing time according to clause 5.3 in which case the UE may skip decoding of the scheduled PDSCH with C-RNTI, MCS-C-RNTI, or CS-RNTI. |
| On a frequency range 2 cell, the UE is not expected to decode a PDSCH scheduled with C-RNTI, MCS-C-RNTI, or CS-RNTI if in the same cell, during a process of P-RNTI triggered SI acquisition, another PDSCH scheduled with SI-RNTI partially or fully overlap in time. The UE is expected to decode a PDSCH scheduled with C-RNTI, MCS-C-RNTI, or CS-RNTI during a process of autonomous SI acquisition. |

Table 9 shows a description about channel reception, which is extracted from TS 38.214. Referring to Table 9, it describes that two channels are received in FR1. However, in the case of eRedCap of Release-18, the above-described embodiments may be applied in order to limit the number of PRBs to a BW range only for OFDM symbols with two overlapping channels. Of course, as shown in Table 9, simultaneous reception of two channels may be deemed to be applied only to FR1. In the present disclosure, paging is considered "P-RNTI triggered SI acquisition" in the description of Table 9.

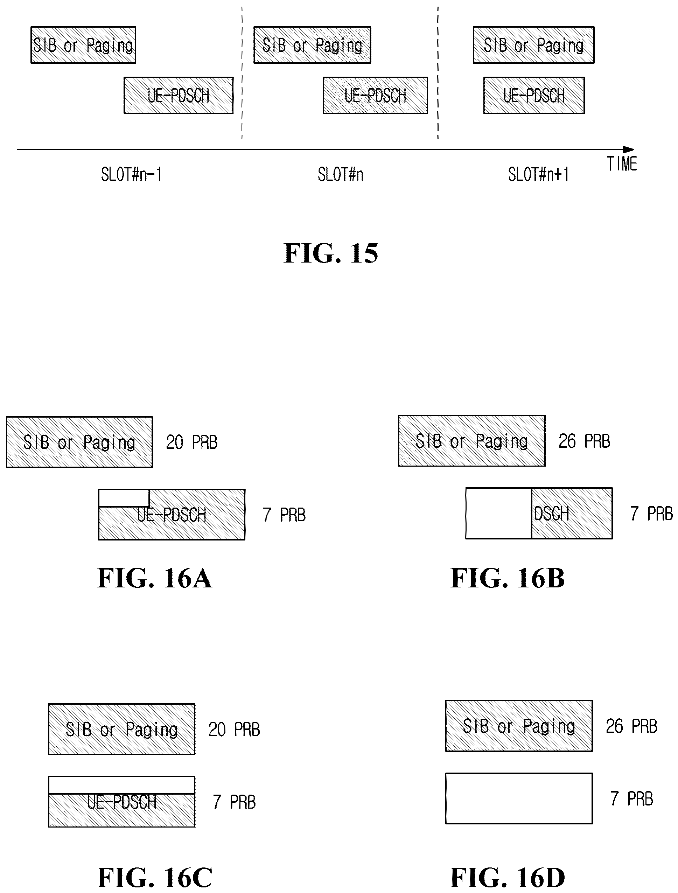

Referring to FIG. 15, an overlapping portion in the slot #n-1 is relatively small, an overlapping portion in the slot #n corresponds to OFDM symbols as large as about a half of the channel, and an overlapping portion in the slot #n+1 is the entire channel. In this case, if the number of PRBs to be processed in the overlapping OFDM symbols does not exceed the number of PRBs (e.g., 25 with 15 KHz SCS) corresponding to a 5 MHz BW, it may not be problematic. However, if the number of PRBs to be processed because of overlap exceeds the number of PRBs corresponding to the 5 MHz BW, a problem may occur. Accordingly, this case requires a method of handling overlapping OFDM symbols by a base station.

Embodiment #4-6: when two PDSCH channels are received simultaneously in a corresponding slot, if the number of PRBs to be processed during OFDM symbol(s) within a section of overlapping channels on a time axis (hereinafter 'overlapping OFDM symbol(s)') exceeds the number of PRBs corresponding to the 5 MHz BW, a corresponding OFDM symbol of a unicast PDSCH is assumed to have no information.

In this case, puncturing or rate matching may be performed, and non-inclusion of unicast information in the overlapping OFDM symbol(s) may be notified through DCI of a PDCCH of unicast. To this end, a new field may be defined, or a bit of an unused field among existing fields may be used without addition of a field. In this case, if puncturing or rate matching may be performed, the value of N is determined and the number of RBs to be processed in the overlapping OFDM symbol(s) is equal to or less than N, simultaneous reception of two PDSCHs may be performed. Herein, N may be predefined or set in an upper layer. This embodiment may be applied only to a case where a paging-RNTI scheduled PDSCH and a unicast PDSCH overlap each other.

In the case of FIG. 15, when the above-described embodiment is applied, as for the number of PRBs of two channels, if the number of a specific PRB exceeds 1, a limitation occurs so that an area of unicast in a corresponding OFDM symbol becomes unavailable. Accordingly, as shown in the above-described embodiments, a removal operation may be performed for at least one PRB. For example, as shown in FIG. 16A to FIG. 16D, depending on the number of PRBs of an SIB or paging channel, as many PRB(s) as exceeding the number of PRBs corresponding to a BW may be removed from a unicast channel. FIG. 16A to FIG. 16D are examples that assume 15 KHz SCS. In addition, in FIG. 16A to FIG. 16D, at least one PRB is removed so that the sum of the number of PRBs of an SIB or paging channel and the number of PRBs of a unicast PDSCH channel does not exceed a limited number.

Embodiment #4-7: when two PDSCH channels are received simultaneously in a specific slot, if the number of PRBs in overlapping OFDM symbol(s) exceeds the number of PRBs corresponding to the 5 MHz BW, at least one PRB is removed for a corresponding OFDM symbol of unicast. A rule of PRB removal may follow the above-described embodiments.

In this case, puncturing or rate matching may be performed, and non-inclusion of unicast information in the overlapping OFDM symbol(s) may be notified through DCI of a PDCCH of unicast. To this end, a new field may be defined, or a bit of an unused field among existing fields may be used without addition of a field. In this case, if puncturing or rate matching may be performed, the value of N is determined and the number of RBs to be processed in the overlapping OFDM symbol(s) is equal to or less than N, simultaneous reception of two PDSCHs may be performed. Herein, N may be predefined or set in an upper layer. This embodiment may be applied only to a case where a paging-RNTI scheduled PDSCH and a unicast PDSCH overlap each other. Additionally, in case overlapping occurs, a terminal may not process decoding for a unicast PDSCH.

Embodiment #4-8: NACK is transmitted as feedback information on a corresponding PDSCH. Alternatively, being processed as DTX, feedback information may not be transmitted to a PUCCH. As defined in TS 38.214, a terminal may operate according to a processing scheme in FR2. This embodiment may be applied to a case where a paging-RNTI scheduled PDSCH and a unicast PDSCH overlap each other. In this case, reception and processing of unicast may not be performed until a next slot (e.g., slot #n+1) of a slot including overlapping OFDM symbol(s).

In the cases of Embodiment #4-6 to Embodiment #4-8, if two channels have different SCSs, the sum of the numbers of PRBs may be determined based on a smaller SCS or a larger SCS. In addition, as long as the aggregate number of PRBs does not exceed an allowed number of PRBs, all PRBs of overlapping OFDM symbol(s) may be used for unicast, or some PRBs within a unicast channel may be removed.

Embodiment #4-9: in case two channels have different SCSs, the sum of the numbers of PRBs may be determined by using one SCS as a reference SCS, and if the aggregate number of PRBs exceeds the number of PRBs corresponding to a 5 MHz BW, at least one of the above-described embodiments may be applied.

The present disclosure describes embodiments for addressing a case where the number of PRBs of a unicast PDSCH exceeds a maximum number of PRBs or a case where the number of PRBs in an overlapping portion between an SIB or paging channel and a unicast channel exceeds the maximum number of PRBs. However, according to another embodiment, apart from PRB removal, granularity of a RBG may also be adjusted. When a specific RBG size is too big, it may not be easy to signal allocation of RBs that do not exceed 25 PRBs with 15 KHz SCS or 12 PRBs with 30 KHz SCS. In this case, for a specific RBG size, a smaller RBG size may be applied irrespective of the number of RBs of BWP. For example, the cases of a RBG size of 16 with 15 KHz SCS or a RBG size of 8 with 30 KHz SCS may each be adjusted to a RBG size of 8 and a RBG size of 4.

Embodiment #4-10: in case a specific RBG has a RBG size with too big granularity, a half of the RBG size is operated. Herein, when a paging PDSCH or an SIB PDSCH overlaps with a unicast PDSCH in some OFDM symbols, even if the number of PRBs of unicast scheduled for the half-sized RBG exceeds a maximum number of BW PRBs per SCS, PRB removal is performed by the methods of Embodiment #4-6 and Embodiment #4-7 in the proposal 4.

The present disclosure describes an embodiment for a unicast PDSCH. The unicast PDSCH may be understood as a PDSCH where a PDCCH is scheduled with a C-RNTI, but in case a PDCCH is scheduled with a temporary cell-RNTI (TC-RNTI) in a RACH procedure, a message 4, which is a PDSCH, may exceed the number of PRBs corresponding to a 5 MHz BW. A unicast PDSCH specifies a receiver, but a TC-RNTI scheduled channel does not specify one terminal. Accordingly, when PRBs exceeding the number of PRBs corresponding to a 5 MHz BW are indicated by FDRA in a PDCCH, an eRedCap terminal may determine that a corresponding PDSCH does not belong to it, and may not perform decoding. In case PRBs are within the number of PRBs corresponding to the 5 MHz BW, FDM is performed, but processing is possible only for an overlap case of OFDM symbols in a time domain. In this situation, a base station may operate a unicast channel and a TC-RNTI scheduled channel not to overlap.

- Embodiment #4-11: in case a TC-RNTI scheduled MSG4 and an SIB scheduled based on P-RNTI triggered SI acquisition or autonomous SIB are frequency-division multiplexed (FDM) with each other but overlap with each other in at least one OFDM symbol, only if the number of PRBs allocated for MSG4 is within the number of PRBs corresponding to a 5 MHz BW, simultaneous decoding may be performed.
- Embodiment #4-12: in case a TC-RNTI scheduled MSG4 and an SIB scheduled based on P-RNTI triggered SI acquisition or autonomous SIB are frequency-division multiplexed (FDM) with each other but overlap with each other in at least one OFDM symbol, if the number of PRBs allocated for MSG4 exceeds the number of PRBs corresponding to a 5 MHz BW, decoding of MSG4 may not be performed. In addition, NACK may be transmitted. Furthermore, notification of a RA-RNTI based PDCCH may not be delivered to MAC.
- Embodiment #4-13: in case a PDSCH of MSG4 scheduled with TC-RNTI exceeds the number of PRBs corresponding to a 5 MHz BW, a terminal may not deliver notification of a PDCCH to MAC and not perform PDSCH decoding attempt any more. This embodiment may provide an advantageous effect on power consumption.

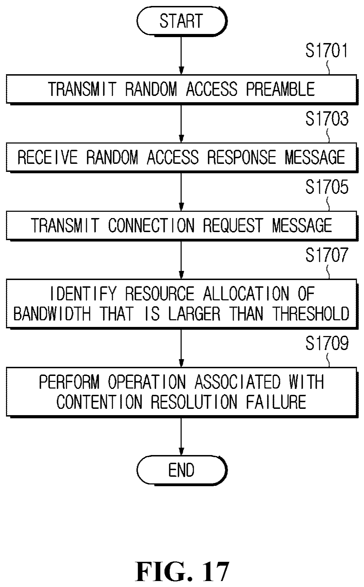

FIG. 17 illustrates an example of a procedure of performing random access according to an embodiment of the present invention.

Referring to FIG. 17, at step S1701, a terminal transmits a random access preamble. Specifically, the terminal acquires synchronization with a base station and receives system information. The terminal identifies a random access channel based on the system information and then transmits the random access preamble through the identified random access channel. Herein, the terminal may select at least one RACH occasion in the random access channel and transmit the random access preamble using the selected RACH occasion.

At step S1703, the terminal receives a random access response message. To this end, the terminal may determine a RA-RNTI based on information related to the random access preamble, which is transmitted at step S1701, decode DCI that schedules the random access response message, and then receive the random access response message. Through the random access response message, the terminal may identify a uplink resource for transmitting a connection request message. In addition, through the random access response message, the terminal may identify a TC-RNTI.

At step S1705, the terminal transmits the connection request message. The terminal may transmit the connection request message through the uplink resource indicated by resource allocation information included in the random access response message. The connection request message is a message defined in a RRC layer and may be referred to as MSG3 in the random access procedure.

At step S1707, the terminal identifies resource allocation of a bandwidth that is larger than a threshold. That is, the terminal identifies that a channel scheduled by the base station has a larger bandwidth than the threshold. After transmitting MSG3, the terminal attempts to receive MSG4. To this end, the terminal may decode DCI including resource allocation information for MSG4 by using a TC-RNTI. Herein, PDSCH transmission for MSG4 scheduled by a PDCCH may be identified or detected to have a larger bandwidth than what the terminal is capable of receive or process per slot. Herein, the threshold may be a maximum bandwidth that is allowed for a RedCap or eRedCap UE. That is, the terminal may identify that a frequency resource indicated by the DCI, that is, the number of RBs is greater than the number of RBs corresponding to the maximum bandwidth that is allowed for a RedCap or eRedCap terminal.

At step S1709, the terminal performs at least one operation related to contention resolution failure. That is, as the PDSCH transmission scheduled by a PDCCH is detected to have a larger bandwidth than what the terminal is capable of receive or process per slot, the terminal may determine that the terminal cannot receive or process the PDSCH. Accordingly, the terminal may determine that the PDSCH is not a channel for it and the contention is failure. Thus, the terminal may stop a timer related to random access contention resolution (e.g., ra-ContensionResolutionTimer), discard the TC-RNTI, and determine that contention resolution is not successful.

As described with reference to FIG. 17, the terminal may determine failure of contention based on a channel with a larger bandwidth than an allowed bandwidth being scheduled. Herein, the scheduling of the channel with the larger bandwidth than the allowed bandwidth may be treated as failure of decoding of a PDSCH. Herein, it may be necessary to notify the decoding failure of the PDSCH to L2 MAC through a new signal so that the MAC may perceive decoding failure of MAC PDU.

In addition, in case MSG4 scheduled with TC-RNTI does not overlap with broadcasting in an OFDM symbol within one slot, if a UE perceives that FDRA allocates PRBs exceeding the number of PRBs corresponding to a 5 MHz BW in a PDCCH, among random access procedures, a procedure shown in Table 10 may be performed regarding contention resolution. When the MAC PDU is considered to be not successful, the operations after 3> else in Table 10 may be performed.

[Table 10]

| |
|---|
| 2> else if the CCCH SDU was included in Msg3 and the PDCCH transmission is addressed to its *TEMPORARY_C-RNTI*:<br>    3> if the MAC PDU is successfully decoded:<br>        4> stop *ra-ContentionResolutionTimer*,<br>        4> if the MAC PDU contains a UE Contention Resolution Identity MAC CE; and<br>        4> if the UE Contention Resolution Identity in the MAC CE matches the CCCH SDU transmitted in Msg3:<br>            5> consider this Contention Resolution successful and finish the disassembly and demultiplexing of the MAC PDU;<br>            5> if this Random Access procedure was initiated for SI request:<br>                6> indicate the reception of an acknowledgement for SI request to upper layers.<br>            5> else:<br>                6> set the C-RNTI to the value of the *TEMPORARY_C-RNTI;*<br>            5> discard the *TEMPORARY_C-RNTI;*<br>            5> consider this Random Access procedure successfully completed.<br>        4> else:<br>            5> discard the *TEMPORARY_C-RNTI;*<br>            5> consider this Contention Resolution not successful and discard the successfully decoded MAC PDU.<br>    3> else ... **If notification or signaling on FDRA allocation with 5MHz or more for Rel-18 eRedCap**<br>        4> stop ra-ContentionResolutionTimer:<br>            5> discard the TEMPORARY_C-RNTI;<br>            5> consider this Contention Resolution not successful and discard the successfully |

In this case, irrespective of whether or not decoding is attempted for a PDSCH scheduled by the PDCCH in L1, the terminal may notify failure of successful decoding of MAC PDU because of CRC error occurrence and the like in L1 or scheduling of a number of PRBs corresponding to a 5 MHz BW to L2 MAC through new signaling. A condition for the new signaling may be expressed as shown by the next row of 3> else in Table 10. Furthermore, as the CRC error occurrence is considered, the terminal may process transmission of NACK in L1.

In case the above-described signaling using TC-RNTI allocates a number of PRBs exceeding the number of PRBs corresponding to a specific BW (e.g., the number of PRBs corresponding to a 5 MHz BW) for an eRedCap terminal, an operation of identifying new signaling after notification of reception of PDCCH may be defined as in Table 11 below.

[Table 11]

| |
|---|
| 1> if notification of a reception of a PDCCH transmission of the SpCell is received from lower layers:<br>    2> if the C-RNTI MAC CE was included in Msg3:<br>        3> if the Random Access procedure was initiated for SpCell beam failure recovery or for beam failure recovery of both BFD-RS sets of SpCell (as specified in clause 5.17) and the PDCCH transmission is addressed to the C-RNTI; or<br>        3> if the Random Access procedure was initiated by a PDCCH order and the PDCCH transmission is addressed to the C-RNTI; or<br>        3> if the Random Access procedure was initiated by the MAC sublayer itself or by the RRC sublayer and the PDCCH transmission is addressed to the C-RNTI and contains a UL grant for a new transmission:<br>            4> consider this Contention Resolution successful;<br>            4> stop *ra-ContentionResolutionTimer,*<br>            4> discard the*TEMPORARY_C-RNTI;* |

(continued)

> 4> consider this Random Access procedure successfully completed.
>
> 2> else if the CCCH SDU was included in Msg3 and the PDCCH transmission is addressed to its *TEMPORARY_C-RNTI*:
>
> > 3> **If notification or signaling on FDRA allocation with SMHz or more for Rel-18 eRedCap**
> >
> > > 4> discard the TEMPORARY_C-RNTI;
> > >
> > > 4> Stop ra-ContntionResultuimTimer and Consider CR not successful PDU

Alternatively, if-conditional may be added for "notification or signaling on 5MHz or more FDRA for Rel-18 eRedCap' following 3> else in Table 11.

Although a PDCCH is rightly decoded from the beginning in L1, an MSG4 PDCCH with TC-RNTI itself may be processed as not received or be discarded.

Embodiment #5: an operation scheme of a Redcap terminal through limitation of other factors affecting a max T-put instead of limitation on the number of PRBs of a PDSCH

Release-18 eRedCap aims to realizing a terminal with a max T-put of about 10 Mbps through limitation on the number of PRBs. However, of course, the number of PRBs may be limited, but reduced capacity through limitation on other factors affecting the T-put may be realized in PxSCH using C-RNTI. This embodiment may be applied only to a Release-18 eRedCap feature terminal to which unicast PDSCH scheduling with allocated PRBs equal to or less than the number of PRBs corresponding to 5 MHz BW is applied. Additionally, this embodiment may also be applied to a Rel-18 eRedCap feature terminal to which unicast PDSCH scheduling with PRBs exceeding the number of PRBs corresponding to 5 MHz BW is applied.

- Embodiment #5-1: in case PRBs equal to or less than the number of PRBs corresponding to 20 MHz BW are scheduled, only a smallest scale factor may be used. Herein, a scale factor is a parameter, which can be set by upper-layer signaling, and is multiplied by the number of layers, a maximum modulation order, and a predefined maximum transfer rate in order to estimate a data transfer rate. For example, 0.4 may be used for a scale factor. In this case, as MIMO and QPSK of one layer are scheduled, T-put may be about 10 Mbps.
- Embodiment #5-2: in case PRBs equal to or less than the number of PRBs corresponding to 5 MHz BW are scheduled, a scale factor may be set only to 0.8 or 0.4. In case the scale factor is 0.8, 16QAM of one layer or QPSK of two layers may be scheduled. In case the scale factor is 0.4, 16QAM of two layers or QPSK of four layers may be scheduled.
- Embodiment #5-3: like in the above-described Embodiment #5-1 and Embodiment #5-3, in order to achieve a specific T-put, a limitation may be imposed on scale factor, the number of MIMO layers, and modulation order. If scheduling exceeding the number of MIMO layers, a modulation order and the like is performed rather than a combination satisfying a specific T-put (e.g., 10 Mbps in Rel-18 eRedCap), a corresponding PDSCH may be dropped. Alternatively, a terminal may not expect scheduling indicating the number of MIMO layers, a modulation order and the like, which exceed a range satisfying a specific T-put. If a scale factor limited in a specific T-put (e.g., Rel-18 eRedCap) is used, RRC connection failure may be declared. Instead of setting a limit on each of a scale factor, the number of MIMO layers and a modulation order, in case a specific combination for the three items or a value determined by a specific calculation (e.g. 3.2 or 0.75) is exceeded or in case there is an indication of a PDCCH for a specific combination of the three items, at least one of skip, drop, NACK feedback, and RRC connection failure declaration of the above-described PDSCH may be performed. Alternatively, a limit may be imposed so that a specific value or more may be allocated for K1 value in the PDCCH.
- Embodiment #5-4: the above-described Embodiment #5-1 to Embodiment #5-3, which pose a limit on T-put, may be applied not only to C-RNTI based unicast but also to MBS operation. An MBS channel and a unicast channel have much similarity in operation. For example, this embodiment may be applied only to G-RNTI. As another example, this embodiment may be applied only to multicasting.
- Embodiment #5-5: in a slot where a PDSCH scheduled with RA-RNTI or MsgB-RNTI is received, even if a unicast PDSCH or an MBS PDSCH does not overlap in an OFDM symbol, the unicast PDSCH or the MBS PDSCH may be dropped. For example, this embodiment may be applied only to a case where the number of PRBs allocated for a RACH-related PDSCH and a unicast or MBS-related PDSCH exceeds the number of PRBs corresponding to 5 MHz BW.

In a typical device type supporting up to 100 MHz in 5G, the Redcap device of Release-17 supports a maximum bandwidth of 20 MHz, thereby simplifying components or operation and significantly reducing cost. The present disclosure proposes a technology for reducing additional cost in terms of buffer size or memory, while not significantly modifying the initially known technology in Release-17. Generally, limitation on memory, buffer size and the like is applied mainly to user-specified information like shared channel rather than control channel, and when the number of RBs allocated for PxSCH is limited to a specific value of N, cost of memory may be saved. Of course, it may be said that limitation on the number of RBs of every channel and reduction of a general memory size of a channel of PxSCH, which is used most, is a method of further saving cost, while minimizing modified points in Release-17 Redcap. In case there are many modified points in specifications, production cost may be reduced with respect to hardware or platform, but since verification and IoDT or IoT-related certification for the modified points may generate much additional cost, the proposed technology may be expected to have a cost reduction effect through minimized modification of specification.

Examples of the above-described proposed methods may be included as one of the implementation methods of the present disclosure and thus may be regarded as kinds of proposed methods. In addition, the above-described proposed methods may be independently implemented or some of the proposed methods may be combined (or merged). The rule may be defined such that the base station informs the UE of information on whether to apply the proposed methods (or information on the rules of the proposed methods) through a predefined signal (e.g., a physical layer signal or a higher layer signal).

Those skilled in the art will appreciate that the present disclosure may be carried out in other specific ways than those set forth herein without departing from the spirit and essential characteristics of the present disclosure. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. Moreover, it will be apparent that some claims referring to specific claims may be combined with another claims referring to the other claims other than the specific claims to constitute the embodiment or add new claims by means of amendment after the application is filed.

## Industrial Applicability

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

1. A method performed by a terminal in a wireless communication system, the method comprising:

   transmitting a random access preamble to a base station;
   receiving a random access response message from the base station;
   transmitting a connection request message to the base station;
   identifying that a channel scheduled by the base station has a larger bandwidth than a threshold; and
   in response to the channel having the larger bandwidth than the threshold, performing at least one operation related to failure of contention resolution.

2. The method of claim 1, wherein the at least one operation comprises at least one of stopping a timer related to random access contention resolution, discarding of a temporary cell-radio network temporary identifier (TC-RNTI), and determining that contention resolution is not successful.

3. The method of claim 1, wherein the threshold includes a max scheduled transmission bandwidth that is allowed for the terminal.

4. The method of claim 1, wherein the max scheduled transmission bandwidth includes a maximum bandwidth that is allowed for a reduced capability (RedCap) or enhanced RedCap (eRedCap) user equipment (UE).

5. The method of claim 1, further comprising:
   stopping an attempt of decoding for the channel.

6. The method of claim 5, further comprising:

determining failure of the decoding for the channel; and
performing at least one operation responding to the failure of the decoding.

7. The method of claim 6, wherein the at least one operation comprises negative-acknowledge (NACK) transmission.

8. The method of claim 1, further comprising:
delivering an indicator, which notifies that the channel has the larger bandwidth than the threshold, to a media access control (MAC) layer.

9. A terminal in a wireless communication system, the terminal comprising:

a transceiver; and
a processor coupled with the transceiver,
wherein the processor is configured to:

transmit a random access preamble to a base station,
receive a random access response message from the base station,
transmit a connection request message to the base station,
identify that a channel scheduled by the base station has a larger bandwidth than a threshold, and
in response to the channel having the larger bandwidth than the threshold, perform at least one operation related to failure of contention resolution.

10. A communication device comprising:

at least one processor;
at least one computer memory coupled with the at least one processor and storing an instruction that instructs operations when executed by the at least one processor,
wherein the operations comprises:

transmitting a random access preamble to a base station;
receiving a random access response message from the base station;
transmitting a connection request message to the base station;
identifying that a channel scheduled by the base station has a larger bandwidth than a threshold; and
in response to the channel having the larger bandwidth than the threshold, performing at least one operation related to failure of contention resolution.

11. A non-transitory computer-readable medium storing at least one instruction, the non-transitory computer-readable medium including the least one instruction that is executable by a processor,
wherein the at least one instruction instructs a device to:

transmit a random access preamble to a base station,
receive a random access response message from the base station,
transmit a connection request message to the base station,
identify that a channel scheduled by the base station has a larger bandwidth than a threshold, and
in response to the channel having the larger bandwidth than the threshold, perform at least one operation related to failure of contention resolution.

**FIG. 1**

**FIG. 2**

**FIG. 3**

**FIG. 4**

FIG. 5

Resource grid

1 RE

1 subcarrier

1 symbol

A carrier
(up to 3300 subcarriers, i.e, 275 RBs)

A BWP

1 RB=12 subcarrier

l=0 ···

k=0

**FIG. 6**

**FIG. 7**

INITIAL CELL SEARCH — PSS/SSS& [DLRS]& PBCH — S701

SYSTEM INFORMATION RECEPTION — PDCCH/ PDSCH (BCCH) — S702

RANDOM ACCESS PROCEDURE — PRACH (S703) — PDCCH/ PDSCH (S704) — PUSCH (S705) — PDCCH/ PDSCH (S706)

GENERAL DL/UL Tx/Rx — PDCCH/ PDSCH (S707) — PUSCH/ PUCCH (S708)

- DL/UL ACK/NACK
- UE CQI/PMI RI REPORT USING PUSCH AND PUCCH

| $n_{CRB}=n_{PRB}+N_{BWP,i}^{start}$ | $n_{PRB}(N_{BWP,i}^{start}=4)$ | Config 2 (P=4) | $n_{PRB}(N_{BWP,i}^{start}=5)$ | Config 2 (P=4) |
|:---:|:---:|:---:|:---:|:---:|
| Bandwidth part i, $N_{BWP,i}^{size}=20$ | | | | |
| 0 | | | | |
| 1 | | | | |
| 2 | | | | |
| 3 | | | | |
| 4 | 0 | RBG 00 | | |
| 5 | 1 | RBG 00 | 0 | RBG 00 |
| 6 | 2 | RBG 00 | 1 | RBG 00 |
| 7 | 3 | RBG 00 | 2 | RBG 00 |
| 8 | 4 | RBG 01 | 3 | RBG 01 |
| 9 | 5 | RBG 01 | 4 | RBG 01 |
| 10 | 6 | RBG 01 | 5 | RBG 01 |
| 11 | 7 | RBG 01 | 6 | RBG 01 |
| 12 | 8 | RBG 02 | 7 | RBG 02 |
| 13 | 9 | RBG 02 | 8 | RBG 02 |
| 14 | 10 | RBG 02 | 9 | RBG 02 |
| 15 | 11 | RBG 02 | 10 | RBG 02 |
| 16 | 12 | RBG 03 | 11 | RBG 03 |
| 17 | 13 | RBG 03 | 12 | RBG 03 |
| 18 | 14 | RBG 03 | 13 | RBG 03 |
| 19 | 15 | RBG 03 | 14 | RBG 03 |
| 20 | 16 | RBG 04 | 15 | RBG 04 |
| 21 | 17 | RBG 04 | 16 | RBG 04 |
| 22 | 18 | RBG 04 | 17 | RBG 04 |
| 23 | 19 | RBG 04 | 18 | RBG 04 |
| 24 | | | 19 | RBG 04 |

**FIG. 8**

**FIG. 9**

FIG. 10

START

RECEIVE CONTROL INFORMATION
FOR RESOURCE ALLOCATION.  S1101

DETERMINE FREQUENCY RESOURCE BY
CONSIDERING MAX SCHEDULED BANDWIDTH  S1103

PERFORM COMMUNICATION
THROUGH ALLOCATED RESOURCE  S1105

END

**FIG. 11**

START

RECEIVE CONTROL INFORMATION
INCLUDING RBG-BASED RIV  S1201

DETERMINE FREQUENCY
RESOURCE BY CONSIDERING
MAX SCHEDULED BANDWIDTH  S1203

PERFORM COMMUNICATION
THROUGH ALLOCATED RESOURCE  S1205

END

**FIG. 12**

RBG#X+5

79
78
77
76 RBG#X+4
75
74
73
72
71
70
69
68 RBG#X+3
67
66
65
64
63
62
61
60 RBG#X+1
59
58
57
56
55
54
53
52 RBG#X
51
50
49
48

RBG#X-1

RBGs within
BWP

**FIG. 13**

81 RBG#8
80
79
78 RBG#7
77
76
75
74 RBG#6
73
72
71
70 RBG#5
69
68
67
66 RBG#4
65
64
63
62 RBG#3
61
60
59
58 RBG#2
57
56
55
54 RBG#1
53
52
51
50 RBG#0
49

RBGs within
BWP

**FIG. 14**

SIB or Paging

UE-PDSCH

SIB or Paging

UE-PDSCH

SIB or Paging

UE-PDSCH

TIME

SLOT#n-1          SLOT#n          SLOT#n+1

## FIG. 15

SIB or Paging    20 PRB

UE-PDSCH    7 PRB

## FIG. 16A

SIB or Paging    26 PRB

DSCH    7 PRB

## FIG. 16B

SIB or Paging    20 PRB

UE-PDSCH    7 PRB

## FIG. 16C

SIB or Paging    26 PRB

7 PRB

## FIG. 16D

START

S1701

TRANSMIT RANDOM ACCESS PREAMBLE

S1703

RECEIVE RANDOM ACCESS RESPONSE MESSAGE

S1705

TRANSMIT CONNECTION REQUEST MESSAGE

S1707

IDENTIFY RESOURCE ALLOCATION OF
BANDWIDTH THAT IS LARGER THAN THRESHOLD

S1709

PERFORM OPERATION ASSOCIATED WITH
CONTENTION RESOLUTION FAILURE

END

**FIG. 17**

# INTERNATIONAL SEARCH REPORT

| International application No. |
| --- |
| **PCT/KR2024/095326** |

| A. | CLASSIFICATION OF SUBJECT MATTER |
| --- | --- |

**H04W 72/04**(2009.01)i; **H04W 72/0457**(2023.01)i; **H04W 72/53**(2023.01)i; **H04W 72/12**(2009.01)i; **H04W 72/231**(2023.01)i; **H04W 72/232**(2023.01)i; **H04L 5/00**(2006.01)i; **H04L 27/26**(2006.01)i; **H04W 88/02**(2009.01)i

According to International Patent Classification (IPC) or to both national classification and IPC

| B. | FIELDS SEARCHED |
| --- | --- |

Minimum documentation searched (classification system followed by classification symbols)

H04W 72/04(2009.01); H04W 72/12(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 랜덤 억세스(random access), 스케줄링(scheduling), 임계치(threshold), 대역폭 (bandwidth), 경쟁해소(contention resolution)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-1276685 B1 (QUALCOMM INCORPORATED) 19 June 2013 (2013-06-19)<br>See paragraphs [0037]-[0058]; and claims 1-11. | 1-4,9-11 |
| A | | 5-8 |
| Y | KR 10-2021-0042095 A (QUALCOMM INCORPORATED) 16 April 2021 (2021-04-16)<br>See paragraphs [0110]-[0118]; and claims 1-39. | 1-4,9-11 |
| A | VIVO. Running MAC CR for RedCap. R2-2201649, 3GPP TSG RAN WG2 Meeting #116bis-e. 12 January 2022.<br>See Annex B. | 1-11 |
| A | 3GPP; TSG RAN; NR: MAC protocol specification (Release 17). 3GPP TS 38.321 V17.3.0 (December 2022). 13 January 2023.<br>See section 5.1.1c. | 1-11 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 May 2024** | **23 May 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 668 932 A1**

**INTERNATIONAL SEARCH REPORT**

| International application No. |
| --- |
| **PCT/KR2024/095326** |

| C. | DOCUMENTS CONSIDERED TO BE RELEVANT | |
| --- | --- | --- |
| Category* | Citation of document, with indication, where appropriate, of the relevant passages | Relevant to claim No. |
| A | MODERATOR (ERICSSON). FL summary #4 on reduced maximum UE bandwidth for RedCap. R1-2202531, 3GPP TSG RAN WG1 Meeting #108-e. 02 March 2022.<br>See section 2. | 1-11 |

Form PCT/ISA/210 (second sheet) (July 2022)

## INTERNATIONAL SEARCH REPORT
### Information on patent family members

International application No.

**PCT/KR2024/095326**

| Patent document cited in search report | | | Publication date (day/month/year) | Patent family member(s) | | | Publication date (day/month/year) |
|---|---|---|---|---|---|---|---|
| KR | 10-1276685 | B1 | 19 June 2013 | CN | 102124774 | A | 13 July 2011 |
| | | | | CN | 102124774 | B | 25 November 2015 |
| | | | | EP | 2319264 | A1 | 11 May 2011 |
| | | | | EP | 2319264 | B1 | 19 September 2018 |
| | | | | JP | 2012-500592 | A | 05 January 2012 |
| | | | | JP | 2014-014123 | A | 23 January 2014 |
| | | | | JP | 5646480 | B2 | 24 December 2014 |
| | | | | JP | 5735062 | B2 | 17 June 2015 |
| | | | | KR | 10-2013-0041300 | A | 24 April 2013 |
| | | | | TW | 201034485 | A | 16 September 2010 |
| | | | | US | 2010-0067412 | A1 | 18 March 2010 |
| | | | | US | 8830884 | B2 | 09 September 2014 |
| | | | | WO | 2010-022070 | A1 | 25 February 2010 |
| KR | 10-2021-0042095 | A | 16 April 2021 | CN | 112567803 | A | 26 March 2021 |
| | | | | CN | 117641462 | A | 01 March 2024 |
| | | | | EP | 3834473 | A1 | 16 June 2021 |
| | | | | EP | 3834473 | B1 | 28 June 2023 |
| | | | | SG | 11202100452 | A | 25 February 2021 |
| | | | | TW | 202033014 | A | 01 September 2020 |
| | | | | TW | I762802 | B | 01 May 2022 |
| | | | | US | 11064549 | B2 | 13 July 2021 |
| | | | | US | 2020-0053811 | A1 | 13 February 2020 |
| | | | | WO | 2020-033695 | A1 | 13 February 2020 |

Form PCT/ISA/210 (patent family annex) (July 2022)